# EUROPÄISCHE PATENTSCHRIFT

(11) **EP 3 066 932 B1**
(45) Veröffentlichungstag und Bekanntmachung des Hinweises auf die Patenterteilung: **25.03.2020**
(21) Anmeldenummer: 16159397.5
(22) Anmeldetag: 09.03.2016
(51) Int. Cl.: A22C 11/00, A22C 7/00, A22C 11/02, A22C 17/00

(54) **MODULARES SYSTEM ZUM FORMEN UND FÖRDERN VON LEBENSMITTEL-PRODUKTEN AUS PASTÖSER MASSE**
MODULAR SYSTEM FOR FORMING AND CONVEYING FOODSTUFF PRODUCTS OF PASTY MATERIAL
SYSTÈME MODULAIRE POUR FORMER ET TRANSPORTER DES PRODUITS ALIMENTAIRES DE MATIERE PÂTEUSE

(30) Priorität: 09.03.2015 DE 102015103423
(43) Veröffentlichungstag der Anmeldung: 14.09.2016
(73) Patentinhaber: VEMAG Maschinenbau GmbH, 27283 Verden/Aller (DE)
(72) Erfinder: Rathmann, Niclas, 27283 Verden/Aller (DE); Hollmann, Christopher, 28832 Achim (DE); Flammann, Uwe, 27308 Kirchlinteln (DE)
(74) Vertreter: Eisenführ Speiser

(56) Entgegenhaltungen:
- EP-A1- 1 767 096
- DE-T2- 60 202 288
- DE-U1- 20 301 908
- DE-U1- 29 511 169
- US-A- 6 045 445
- US-A1- 2005 274 088

## Beschreibung

Die Erfindung betrifft ein modulares System zum Formen und Fördern von Lebensmittel-Produkten aus pastöser Masse.

Förder-Maschinen oder Systeme zum Formen und Fördern von Lebensmittel-Produkten werden zur Herstellung von Lebensmitteln-Produkten aus pastösen Lebensmittel-Massen eingesetzt. Aus den pastösen Massen, wie z.B. Wurstbrät oder Teig, wird jeweils über eine vorbestimmte Zeitdauer eine Vielzahl von variablen Produkten gleicher Größe und Form erzeugt. Die erzeugten Produkte, wie beispielsweise. Fleischbällchen, Hackfleisch-Patties oder Abschnitte von Hackfleischsträngen werden unmittelbar nach der Herstellung durch die Formeinrichtung mittels einer Fördereinrichtung für eine nachfolgende Weiterverarbeitung oder zu deren direkter Verpackung abgeführt.

Die bekannten Systeme zum Formen und Fördern von Lebensmittel-Produkten weisen eine Formeinrichtung zum Formen der herzustellenden dreidimensionalen Produkte aus der Lebensmittelmasse auf, wobei mittels der Formeinrichtung ein Produkt vorgegebener Form und Größe hergestellt werden kann. Der Formeinrichtung ist zudem eine Fördereinrichtung zum Fördern von Lebensmittelprodukten nachgeschaltet, wie beispielsweise ein Förderband. Durch die Fördereinrichtung, welche dem Abgabe- oder Ausgabebereich der Formeinrichtung zugeordnet ist, werden die hergestellten Lebensmittel-Produkte häufig direkt übernommen. Die Fördereinrichtung, wie beispielsweise ein umlaufendes Förderband, transportiert die Produkte zu nachfolgend angeordneten Weiterverarbeitungseinrichtungen oder einer Verpackungsstation.

Die bekannten Systeme bilden üblicherweise eine Einheit aus, welche Bestandteil einer Vorrichtung zur Verarbeitung von Lebensmitteln sind. In Folge eines durchzuführenden Produktwechsels, von beispielsweise zuvor hergestellten kugelförmigen Produkten zu Abschnitten von Hackfleischsträngen, wird jeweils das System mit Form- und Fördereinrichtung als komplette Einheit aus der Produktionslinie einer Verarbeitungsvorrichtung entnommen. Das entfernte System wird dann durch ein anderes System ersetzt, mit dem die Abschnitte von Hackfleischsträngen erzeugt werden. Der Wechsel an der Produktionslinie erfolgt üblicherweise als Austausch des gesamten Systems, weshalb bei jedem Wechsel ein Austausch der Fördereinrichtung durchgeführt wird. Zudem weisen derartige Systeme mit ihren Form- und Fördereinrichtungen, aufgrund ihrer Ausgestaltung als jeweils eine zusammenhängende Einheit, relativ große Abmessungen auf. Das gestaltet den Austausch aus der Produktionslinie mitunter sehr aufwändig. Die nicht benötigten Form- und Fördereinrichtungen sind zudem bis zur nächsten Verwendung an geeigneten Orten zwischenzulagern.

US 6,045,445 A zeigt eine Vorrichtung zum Vereinzeln von Würsten aus einem Wurststrang an einer Trennstelle mit ersten und zweiten Trennelementen. Der Vereinzelungsvorrichtung ist eine Füllmaschine mit einem dem Wurststrang ausgebenden Füllrohr vorgeschaltet.

DE 2951169 U1 bezieht sich auf eine Vorrichtung zum Zusammenfügen verschiedener Lebensmittelprodukte. Die Vorrichtung umfasst ein lineares Transportsystem mit abnehmbaren Arbeitsplattform zum Drehen von Rohbürsten zu Wurstschnecken.

US 2015/274088 A1 betrifft eine Verpackungsvorrichtung zum Verpacken von Stückgütern in Netzen. Die Vorrichtung umfasst einen Rahmen und ein/einen am Rahmen individuell anordbares Klammergerät und/oder anordbaren Spannmechanismus.

Der Erfindung liegt daher die Aufgabe zu Grunde ein modulares System zum Formen und Fördern von Lebensmittel-Produkten aus pastöser Masse anzugeben, an dem ein Produktwechsel vereinfacht ist.

Die Erfindung löst die ihr zu Grunde liegende Aufgabe durch ein modulares System gemäß dem Gegenstand von Anspruch 1.

Der Erfindung liegt die Erkenntnis zu Grunde, dass durch Vorsehen einer lösbaren Verbindung zwischen der Förder-Maschine und dem Form-Modul, welches zur Herstellung geformter Lebensmittel-Produkte verwendet wird, nunmehr eine Trennung zwischen Förder-Maschine und Form-Modul möglich ist. Damit ergibt sich zum einen der Vorteil, dass der Produktwechsel an der Produktionslinie vereinfacht ist, da nur der Bereich in der Produktionslinie ausgetauscht wird, der unmittelbar zum Erzeugen der verschiedenen herzustellenden Lebensmittel-Produkte verwendet wird. Zum anderen sind die Kosten für die Herstellung einer solchen Produktionslinie für unterschiedliche geformte Lebensmittel-Produkte verringert. Die Förder-Maschine mit ihrer Fördereinrichtung, welche zum Abtransport der erzeugten geformten Lebensmittel-Produkte eingesetzt wird, kann innerhalb der Produktionslinie verbleiben. Die Förder-Maschine weist Kopplungsmittel auf, welche eingerichtet sind, das Förder-Modul mit bevorzugt dem Maschinen-Gestell von der Förder- Maschine zum Fördern der Lebensmittel-Produkte reversibel zu koppeln und zu entkoppeln. Die verwendeten Kopplungsmittel ermöglichen somit die erfindungsgemäße Förder-Maschine beliebig oft mit einem Form-Modul in der Produktionslinie zu verbinden und wieder voneinander zu trennen. Mit Hilfe der Kopplungsmittel wird zumindest eine feste Ausrichtung und/oder Arretierung von Förder-Maschine und Form-Modul zueinander bewirkt. Bevorzugt weist die Förder-Maschine an ihrer entgegen in Förderrichtung der Produktionslinie weisenden Gehäuseseite am Maschinen-Gestell ein oder mehrere Kopplungsmittel zum reversiblen Koppeln und Entkoppeln mit dem in Förderrichtung vorgeschalteten Form-Modul auf.

Nach einer bevorzugten Weiterbildung der Erfindung sind ein oder mehrere Kopplungsmittel zum mechanischen Verbinden von miteinander koppelbaren Maschinen vorgesehen. Mit Hilfe der Kopplungsmittel zum mechanischen Verbinden ist insbesondere nach dem Herstellen der mechanischen Verbindung eine bevorzugt starre Verbindung zwischen dem Form-Modul und der Förder-Maschine erreicht. Eine Relativbewegung der miteinander koppelbaren Maschinen wird nach dem Herstellen der mechanischen Verbindung bzw. Kopplung vermieden. Die erfindungsgemäßen Kopplungsmittel ermöglichen ein beliebig oft durchführbares Verbinden und Entkopplen der Maschine und dem Modul mit- und voneinander.

Eine optionale Ausgestaltung des erfindungsgemäßen modularen Systems sieht ein oder mehrere Kopplungsmittel zum Herstellen einer elektrischen und/oder fluidleitenden Verbindung zwischen den miteinander koppelbaren Maschinen vor. Mit Hilfe der erfindungsgemäßen Kopplungsmittel erfolgt vorzugsweise eine funktionelle Verbindung von Förder-Maschine und Form-Modul. Vorzugsweise wird über die Kopplungsmittel eine elektrische und/oder fluidleitende Verbindung hergestellt, wodurch Stell- und Regeleinrichtungen an der Maschine oder dem Modul, welches auch als Maschine bezeichnet wird, durch Signale oder Daten gesteuert werden, die von der anderen Maschine ausgegeben werden. Über die funktionale Verbindung der miteinander koppelbaren Maschinen kann eine aufeinander abgestimmte Taktung der in Förderrichtung des Lebensmittel-Produktes hintereinander angeordneten, koppelbaren Maschinen erreicht werden. Mittels der elektrischen Verbindung werden elektrische Steuersignale oder Daten übertragen. Über die fluidleitende Verbindung erfolgt eine Ansteuerung bzw. Regelung von unterschiedlichen Maschinenteilen, wie zum Beispiel Stellantriebe oder Klemmeinrichtungen, mittels beispielsweise Druckluft oder Hydraulikflüssigkeit.

Bevorzugt weist das Kopplungsmittel ein Aufnahmeteil auf, welches korrespondierend zu einem in dem oder an dem Aufnahmeteil aufnehmbaren Gegenstück eines Kopplungsmittels des Form-Moduls ausgebildet ist. Mit dem Vorsehen eines Aufnahmeteils an der Förder-Maschine, in das vorzugsweise ein korrespondierendes Gegenstück eines Kopplungsmittel des Form-Moduls eingesteckt bzw. eingeschoben wird, wird zumindest erreicht, dass zwei miteinander koppelbare Maschinen (Förder-Maschine und Form-Modul) wenigstens quer zur Einschubrichtung der zusammenwirkenden Kopplungsmittel ausgerichtet werden.

Eine alternative Ausgestaltung des erfindungsgemäßen modularen Systems sieht vor, dass das Kopplungsmittel als ein in oder an einem Aufnahmeteil aufnehmbares Gegenstück ausgebildet ist Das Gegenstück korrespondiert entsprechend mit dem Aufnahmeteil eines Kopplungsmittels des Form-Moduls. Das Verbinden der Kopplungsmitteln beider Maschinen wird insbesondere durch eine Relativbewegung von zumindest einer der miteinander koppelbaren Maschinen erreicht. Dabei wird der Abstand zwischen den miteinander koppelbaren Maschinen derart verringert bzw. die Förder-Maschine und das Form-Modul derart zueinander ausgerichtet werden, dass Aufnahmeteil und Gegenstück miteinander in Eingriff stehen. Das Aufnahmeteil und das Gegenstück sind an den miteinander verbindbaren Maschinen derart angeordnet, dass Aufnahmeteil und Gegenstück eine Einschubrichtung aufweisen, die bevorzugt im Wesentlichen parallel zur Förderrichtung der Produktionslinie verläuft.

Vorzugsweise ist das Aufnahmeteil als Halteteil mit mehreren, vorzugsweise horizontal verlaufenden Haltestreben oder als Hülsenkörper ausgebildet. Darüber ist eine konstruktiv einfache Ausgestaltung der miteinander in Eingriff bringbaren Kopplungsmittel zum mechanischen Verbinden der Maschinen bewirkt. Vorzugsweise wird ein als Halteteil ausgebildetes Aufnahmeteil eingesetzt, welches bevorzugt mehrere etwa horizontal verlaufende Haltestreben aufweist, die vorzugsweise in einer vertikalen Ebene mit Abstand übereinander angeordnet sind. Das Halteteil ist bevorzugt eingerichtet, das Form-Modul über seine Haltestreben tragend aufzunehmen, wobei das Form-Modul in das Halteteil eingehängt wird. Das Kopplungsteil des Form-Moduls weist mit den Haltestreben korrespondierende Aufnahmeschlitze auf, wobei die Aufnahmeschlitze in die Haltestreben eingehängt werden. Alternativ wird ein Hülsenkörper mit einem rechteckigen oder zylindrischen Innen-Querschnitt eingesetzt, in den ein Dorn als Gegenstück einschiebbar ist. Der äußere Querschnitt des Dornes ist bevorzugt korrespondierend zu dem inneren Querschnitt des Aufnahmeteils ausgebildet, wodurch insbesondere quer zur Einschubrichtung ein Formschluss zwischen den miteinander in Kontakt bringbaren Kopplungsmitteln der beiden Maschinen gewährleistet wird. Vorzugsweise weist der Dorn einen äußeren Querschnitt auf, der bevorzugt von seinem freien Ende in Richtung des gegenüberliegend angeordneten Endes zunimmt.

Gemäß einer weiteren bevorzugten Ausgestaltung des erfindungsgemäßen modularen Systems ist dem Kopplungsmittel eine Arretiereinrichtung zugeordnet, welche eingerichtet ist, das Kopplungsmittel des Form-Moduls relativ zu dem Kopplungsmittel zu arretieren. Darüber wird erreicht, dass nach dem mechanischen Verbinden der beiden koppelbaren Maschinen die Kopplungsmittel und somit vorzugsweise das Form-Modul und die Förder-Maschine fest miteinander verbunden sind. Form-Modul und Förder-Maschine lassen sich nach dem Aktivieren der Arretiereinrichtung nicht mehr relativ zueinander bewegen. Einer Relativbewegung, insbesondere einer Verfahrbewegung, von insbesondere dem Form-Modul mittels von bevorzugt an einem Maschinen-Gestell angeordneten Rollen wird darüber auf vorteilhafte Weise entgegengewirkt. Die Arretiereinrichtung weist eine Mess- und/oder Erfassungseinrichtung auf, welche eingerichtet ist, zu ermitteln, ob die Kopplungsmittel von Förder-Maschine und Form-Modul vollständig in Eingriff miteinander stehen, also sich in Kopplungsposition befinden. Dazu weist die Mess- und/oder Erfassungseinrichtung ein oder mehrere Sensoren, wie z.B. induktive Initiatoren auf. Die Mess- und/oder Erfassungseinrichtung ist zudem eingerichtet, bei Erreichen der Kopplungspostion durch die Kopplungsmittel, ein Aktivierungssignal an die Arretiereinrichtung für ein selbsttätiges Arretieren der Kopplungsmittel auszugeben.

Vorzugsweise weist die Arretiereinrichtung mindestens ein beweglich gehaltenes Arretierelement auf, das in eine Arretierposition, in der die Kopplungsmittel zueinander arretiert sind, und eine Freigabeposition für die Kopplungsmittel bringbar ist. Mit dem beweglich gehaltenen Arretierelement ist ebenfalls eine lösbare Verbindung zwischen den Kopplungsmitteln der Maschinen und darüber die reversible Kopplung und Entkopplung zwischen den koppelbaren Maschinen selbst gewährleistet. Bevorzugt ist das Arretierelement entlang einer Bewegungsachse beweglich gehalten, die vorzugsweise senkrecht oder quer zur Einschubrichtung des besipielsweise als Dorn ausgebildeten Kopplungsmittels ausgerichtet ist.

Eine bevorzugte Ausgestaltung der Erfindung sieht vor, dass das Arretierelement einen Verriegelungszapfen aufweist, der in seiner Arretierposition mit einer Ausnehmung am Kopplungsmittel des Form-Moduls in eine Formschlussverbindung bringbar ist. Mit dem Verriegelungszapfen, der eingerichtet ist, in der Arretierposition der Arretiereinrichtung in bevorzugt einer Ausnehmung am Kopplungsmittel der jeweils anderen Maschine eingreift, wird eine bevorzugt spielfreie Arretierung der beiden Kopplungsmittel zueinander gewährleistet. Zum Herstellen der Formschlussverbindung zwischen dem Verriegelungszapfen und der Ausnehmung des bevorzugt als Dorn ausgebildeten Kopplungsmittels, wird der Verriegelungszapfen vorzugsweise senkrecht zur Einschubrichtung des Dorns in das als Aufnahmeteil ausgebildete Kopplungsmittel bewegt.

Gemäß einer alternativen Ausgestaltung des erfindungsgemäßen modularen Systems weist das Arretierelement ein oder mehrere Klemmteile auf, welche mit dem Kopplungsmittel des Form-Moduls in haltende Wirkverbindung bringbar sind. Mit dem einen oder den mehreren Klemmteilen wird bevorzugt eine Haltekraft auf die Oberfläche des bevorzugt als Gegenstück ausgebildeten Kopplungsmittels des Form-Moduls erzeugt. Das Gegenstück wird vorzugsweise an der Maschine mit der Arretiereinrichtung in einem als Aufnahmeteil ausgebildeten Kopplungsmittel aufgenommen. Bei nur einem verwendeten Klemmteil als Arretierelement, welches einseitig auf Oberflächenbereiche des zu arretierenden Kopplungsmittels von beispielsweise des Form-Moduls einwirkt, bilden Bereiche des Kopplungsmittels der Förder-Maschine ein Widerlager für das eine bewegbare Klemmteil der Arretiereinrichtung aus. Bei zwei verwendeten Klemmteilen wirken diese bevorzugt voneinander gegenüberliegenden Seiten aus auf die äußere Oberfläche des Kopplungsmittels der jeweils anderen Maschine. Mit der durch die Klemmteile erzeugten Haltekraft wird vorzugsweise eine Reibschlussverbindung zwischen den miteinander in Anlage bringbaren Oberflächen der Klemmteile und dem damit in haltende Wirkverbindung bringbaren Kopplungsmittel erzielt. Der Reibschluss zwischen den Bauteilen ist derart hoch gewählt, dass eine Relativbewegung an miteinander gekoppelten Maschinen vermieden wird.

Nach einer anderen Weiterbildung der Erfindung ist vorgesehen, dass das Arretierelement an einem manuell betätigbaren, einem elektrischen oder einen mittels eines Fluids gesteuerten Stellantrieb angeordnet ist. Über den Stellantrieb, welcher vorzugsweise ein manuell betätigbarer Spindeltrieb, ein Elektrozylinder oder ein Pneumatikzylinder ist, wird das Arretierelement zum Arretieren der Kopplungsmittel von Förder-Maschine und Form-Modul von der Freigabeposition in die Arretierposition überführt. Zum Lösen der Kopplungsmittel voneinander wird das Arretierelement über dem Stellantrieb wiederum aus seiner Arretierposition in seine Freigabeposition zurück bewegt. Mit den verschiedenen alternativen Ausgestaltungen des Stellantriebs kann das Arretierelement jeweils einfach verstellt und eine hohe Kraftwirkung durch das Arretierelement auf das zu sicherende Kopplungsmittel erzeugt werden.

Vorzugsweise weist das Aufnahmeteil ein oder mehrere Elektro-Steckverbinder und eine Mehrzahl von fluidleitenden Steckverbindern zur Kopplung mit einem oder mehreren Elektro-Steckverbindern und einer Mehrzahl von fluidleitenden Steckverbindern an einem mit dem Aufnahmeteil korrespondierenden Gegenstück des Form-Moduls auf. Der Elektro-Steckverbinder, welcher bevorzugt als Multipol-Stecker ausgebildet ist, ermöglicht eine stromleitende Verbindung zwischen den miteinander zu koppelnden bzw. verbindenden Maschinen, wie beispielsweise einem Form-Modul und einer Förder-Maschine, welche bevorzugt jeweils separat voneinander ausgebildete MaschinenGestelle aufweisen. Über die Elektro-Steckverbinder, wobei ein Steckverbinder als Stecker an der einen Maschine und der andere Steckverbinder als Steckeraufnahme an der anderen Maschine angeordnet ist, kann darüber hinaus eine gezielte Ansteuerung bzw. Anpassung von möglichen aufeinander abgestimmten Antriebs-, Regel- oder Stelleinrichtungen an den beiden Maschinen (Förder-Maschine und Form-Modul) vorgenommen werden. Über die Mehrzahl bzw. Vielzahl der fluidleitenden Steckverbinder an dem Aufnahmeteil und dem mit dem Aufnahmeteil korrespondierenden Gegenstück erfolgt eine fluiddichtende Verbindung zum Überleiten von Druckluft oder unter Druck stehenden Flüssigkeiten zwischen den beiden miteinander koppelbaren Maschinen. Die stromleitende bzw. fluidleitende Verbindung zwischen den jeweiligen Steckverbindern am Aufnahmeteil und dem Gegenstück wird vorzugsweise gleichzeitig mit der mechanischen Kopplung der miteinander zu verbindenden Maschinen umgesetzt. Die Sichern der stromleitenden und/oder der fluidleitenden Verbindung zwischen den Steckverbindern erfolgt mittels der Kopplungsmittel für die mechanische Kopplung von Förder-Maschine und Form-Modul.

Alternativ weist nach einer Weiterbildung der Erfindung die Förder-Maschine anstelle einem Aufnahmeteil mit ein oder mehreren Steckverbindern für eine Elektro-Verbindung und eine fluidleitende Verbindung ein Gegenstück mit ein oder mehreren Elektro-Steckverbindern und eine Mehrzahl von fluidleitenden Steckverbindern zur Kopplung mit einem korrespondierend ausgebildeten Aufnahmeteil an dem Form-Modul auf. Das Gegenstück und die Vielzahl der am Gegenstück vorgesehenen Steckverbinder für die Elektro- und Fluidverbindung sind ähnlich einem Stecker ausgebildet, die in dem Aufnahmeteil und in bevorzugt den am Aufnahmeteil ausgebildeten Steckverbindern für die Elektro- und Fluidverbindung aufgenommen sind. Die Steckverbinder für die Elektro- und Fluidverbindung an dem Aufnahmeteil haben vorzugsweise die Ausgestaltung von Steckeraufnahmen.

Gemäß einer bevorzugten Ausgestaltung des erfindungsgemäßen modularen Systems sind an dem Maschinen-Gestell ein oder mehrere Rollen zum Verfahren der Förder-Maschine angeordnet. Mit den an der Förder-Maschine angeordneten Rollen bzw. Rollelemente ist die Förder-Maschine bevorzugt verfahrbar ausgebildet. Damit wird erreicht, dass die Förder-Maschine, welche dem Form-Modul in Förderrichtung der herzustellenden Lebensmittel-Produkte dem Form-Modul vorzugsweise nachgeschaltet wird, während des Wechsels bzw. Austauschs eines Form-Moduls in der Produktionslinie verfahren werden kann. Dadurch wird der Austausch bzw. Wechsel des Form-Moduls weiter vereinfacht. Unter dem Form-Modul nachgeschaltet ist zu verstehen, dass die Förder-Maschine in Förderrichtung der pastösen Masse stromabwärts des Form-Moduls angeordnet ist, vorzugsweise unmittelbar an dieses anschließend.

Erfindungsgemäß ist an dem modularen System eine am Maschinen-Gestell der Förder-Maschine angeordnete Portioniereinheit zum Unterteilen eines durch ein Form-Modul geformten Endlos-Stranges in Strangabschnitte vorbestimmter Länge vorgesehen. Mit Hilfe der Portioniereinheit, welche an der Förder-Maschine, insbesondere deren Maschinen-Gestell angeordnet ist, kann ein Endlos-Strang aus pastöser Lebensmittel-Masse, der von einem jeweils mit der Förder-Maschine koppelbaren Form-Modul erzeugt wird, in Strangabschnitte vorbestimmter Länge unterteilt werden. Die Portioniereinheit ist vorzugsweise dazu eingerichtet, um beispielsweise im Abstand hinter einem Auslass eines Form-Modules angeordnet zu werden. In einer alternativen Ausgestaltung wird die Portioniereinheit in Förderrichtung der pastösen Masse stromaufwärts zum Auslass eines Förderkanals angeordnet, wobei die Portioniereinheit durch einen vor dem Auslass angeordneten Schlitz im Förderkanal geführt wird und den Strang aus pastöser Masse noch im Förderkanal in einzelne Strangabschnitte unterteilt.

Vorzugsweise ist die Portioniereinheit im Wesentlichen quer zur Förderrichtung des Endlos-Stranges beweglich am Maschinen-Gestell angeordnet und dazu eingerichtet, zwischen einer Parkstellung und einer Arbeitsstellung bewegt zu werden. Die Portioniereinheit oder Teile derer sind bevorzugt schwenkbeweglich oder schiebebeweglich an der Förder-Maschine gehalten bzw. aufgenommen. Die Portioniereinheit kann somit zwischen einer Arbeitsstellung, in der die Portioniereinheit einen durch ein Form-Modul erzeugten Endlos-Strang fortwährend unterteilt, und einer Parkstellung, in der die Portioniereinheit bei Nichtgebrauch zwischengelagert bzw. geparkt wird, hin und her bewegt, insbesondere verschoben oder verschwenkt werden. Bevorzugt wird die Portioniereinheit in einer Richtung quer zur Förderrichtung des Endlos-Stranges bewegt. Für eine Ausrichtung der Portioniereinheit zu den verschiedenen mit der Förder-Maschine koppelbaren Form-Modulen, ist die Portioniereinheit dazu eingerichtet, vorzugsweise parallel in Förderrichtung des erueugten Endlos-Stranges und einer bevorzugt an der Förder-Maschine angeordneten Fördereinrichtung verschoben zu werden.

Die Portioniereinheit weist gemäß der Erfindung ein Portioniermesser auf, welches in der Arbeitsstellung der Portioniereinheit den Förderweg des Endlos-Stranges in vorbestimmten Zeitabständen passiert. Der Einsatz eines Portioniermesser ermöglicht eine einfache Unterteilung eines jeweils mit einem Form-Modul geformten und beispielsweise ausgegebenen Endlos-Strang in Strangabschnitte vorbestimmter Länge. Das Portioniermesser ist über ein Drehlager rotatorisch aufgenommen, wobei das Portioniermesser ein Einzelklingen- oder Mehrklingenmesser sein kann. Die Rotationsachse des Drehlagers verläuft bevorzugt parallel zur Förderrichtung des geformten Endlos-Stranges. Das Portioniermesser ist dazu eingerichtet, Scheibenkörper mit einem im Wesentlichen gleichmäßigen kreisrunden Querschnitt, auch bezeichnet als Patty, oder Hackfleischportionen zu erzeugen. Sofern das Portioniermesser der Portioniereinrichtung nicht benötigt wird, kann dieses in eine Parkstellung an der Förder-Maschine durch Verschwenken oder Verschieben überführt werden.

In einer bevorzugten Ausführungsform des erfindungsgemäßen modularen Systems ist vorgesehen, dass die Fördereinrichtung ein oder mehrere endlos umlaufende Förderelemente aufweist. Mit Hilfe der zum Einsatz kommenden endlos umlaufenden Förderelemente, wie beispielsweise einem Endlos-Förderband lässt sich auf vorteilhafte Weise eine kontinuierliche Abführbewegung der durch das Form-Modul erzeugten Produkte gewährleisten. Die Fördereinrichtung weist bevorzugt ein, zwei oder mehr Förderelemente auf. Mit zwei oder mehr Förderelementen lassen sich Richtungsänderungen in der Förderrichtung der abzuführenden Produkte oder auch Abstandsänderungen zwischen den in vorgegebenen Abständen über das Form-Modul ausgegebenen Produkte umsetzen oder erzielen.

Gemäß einer bevorzugten Weiterbildung weist die Fördereinrichtung zwei übereinander angeordnete, gegenläufig angetriebene Förderelemente auf. Mit Hilfe der übereinander angeordneten Förderelemente lässt sich eine kontrollierte Abführbewegung der erzeugten Produkte auf einfache Weise vornehmen. Das untere Förderelement, auf dem die erzeugten Produkte aufliegen, ist ein Abtransport-Band, oberhalb dessen in einem vorbestimmten Abstand ein weiteres Förderelement, vorzugsweise ein Plättband, angeordnet ist. Abtransport-Band und Plättband sind mit dem Maschinen-Gestell der Förder-Maschine verbunden. Beide Förderelemente, Abtransportband und Plättband werden gegenläufig über bevorzugt unterschiedliche Antriebsmittel angetrieben, womit eine genaue Steuerung der Fördergeschwindigkeit der erzeugten Produkte möglich ist. Vorzugsweise weisen die gegenläufig angetriebenen Förderelemente eine identische Fördergeschwindigkeit auf. Durch Verändern der Fördergeschwindigkeiten, wodurch sich eine Relativbewegung der Förderelemente zueinander einstellt, kann ein Nachformen der zu erzeugenden Produkte umgesetzt werden.

Vorzugsweise sind die übereinander angeordneten Förderelemente im Abstand relativ zueinander veränderbar. Die Höhe des Plättbandes oberhalb des Abtransportbandes ist verstellbar, wobei vorzugsweise das Plättband an Verstellmitteln zur Höhenverstellung angeordnet ist. Mit dem oberen Förderelemente kann eine Anpresswirkung der erzeugten kugelförmig geformten Produkte, der im Wesentlichen kreisförmigen Scheibenkörper aus der pastösen Lebensmittel-Masse oder den Strangabschnitten aus der pastösen Masse auf das Abtransportband erfolgen. In einer bevorzugten Ausgestaltung sind beide Förderelemente über die Verstellmittel zur Höhenverstellung in ihrer Neigung an der Förder-Maschine gegenüber der Horizontalen veränderbar.

Gemäß der Erfindung sind mehrere verschiedene Form-Module zur Herstellung geformter Lebensmittel-Produkte aus pastöser Masse, mit einer Formeinrichtung zum Formen dreidimensionaler Produkte aus der Lebensmittel-Masse vorgesehen, welche sich dadurch auszeichnen, dass an dem Form-Modul Kopplungsmittel zum lösbaren Verbinden des Moduls mit einer Förder-Maschine zum Fördern von Lebensmittel-Produkten nach einem der vorstehend beschriebenen bevorzugten Ausführungsformen ausgebildet sind. Der Erfindung liegt die Erkenntnis zu Grunde, dass mittels der Kopplungsmittel zum lösbaren Koppeln an einem erfindungsgemäßen Form-Modul eine beliebig oft herstellbare und wieder lösbare Verbindung und damit ein einfacher Austausch an einer Förder-Maschine vorgenommen werden kann. Die erfindungsgemäße Förder-Maschine mit ihrer Fördereinrichtung zum Fördern der Lebensmittel-Produkte kann somit auf vorteilhafte Weise während eines Produktwechsels und dem damit verbundenen Austausch des Form-Moduls innerhalb der Produktionslinie verbleiben.

Der Erfindung liegt ferner die Erkenntnis zu Grunde, dass mit der separaten Ausgestaltung von Form-Modul und der Förder-Maschine als separate zusammensetzbare Module eines Systems zum Herstellen und Verarbeiten von Lebensmittel-Massen für einen Produktwechsel nur ein Wechsel bzw. Austausch des Teils bzw. des Abschnitts der Produktionslinie vorgenommen wird, der für die Ausgestaltung der speziellen Form des herzustellenden Produktes entscheidend ist. Ein Wechsel bzw. Austausch von Vorrichtungsteilen, die weiterhin in der Produktionslinie benötigt werden, wird damit vermieden. Über die an dem Form-Modul und der Förder-Maschine ausgebildeten Kopplungsmittel, welche bevorzugt jeweils am Form-Modul und am Maschinen-Gestell der Förder-Maschine angeordnet sind, erfolgt eine mechanische Verbindung beider Maschinen. Darüber hinaus kann mittels der Kopplungsmittel auch eine elektrische und/oder fluidleitende Verbindung zwischen den miteinander koppelbaren Maschinen hergestellt werden. Hinsichtlich vorteilhafter Ausgestaltungen der der Förder-Maschine wird auf die oben beschriebenen Ausführungen verwiesen.

Bevorzugt weist jedes der Form-Module zumindest eine Formeinrichtung zum Formen dreidimensionaler Produkte aus der Lebensmittel-Masse auf. Die Kopplungsmittel, welche zum lösbaren Verbinden des Form-Modules mit der Förder-Maschine verwendet werden, sind vorzugsweise direkt an der Formeinrichtung eines jeweiligen Form-Modules angeordnet. Vorzugsweise sind solch derartig erfindungsgemäß ausgebildete Form-Module als Einhänge-Modul ausgebildet, welche selbst keine eigenen Aufstellstrukturen für eine Verbindung mit dem Untergrund aufweisen. Die Formeinrichtung wird strukturell durch das auf dem Untergrund aufstehende Maschinengestell der Förder-Maschine getragen.

Gemäß einer alternativen Ausgestaltung des erfindungsgemäßen Systems weist jedes der Form-Module ein Maschinengestell, an dem die Formeinrichtung zum Formen dreidimensionaler Produkte angeordnet ist, und vorzugsweise ein oder mehrere am Maschinengestell angeordnete Rollen zum Verfahren des Form-Moduls auf. Die Formeinrichtung des Form-Moduls ist an einem separaten Maschinen-Gestell angeordnet, über das eine Krafteinleitung in den Untergrund gewährleistet ist. Am Maschinengestell sind vorzugsweise Rollen bzw. Rollelemente zum Verfahren des Form-Modules angeordnet. Mithilfe der Rollelemente ist der Austausch von insbesondere dem Form-Modul in der Produktionslinie weiter vereinfacht. Die Rollen bzw. Rollelemente sind an der Unterseite angeordnet und vorzugsweise und jeweils um eine senkrecht zur Horizontalen ausgerichteten Drehachse frei beweglich.

Vorzugsweise ist die Formeinrichtung zum Formen eines Endlos-Stranges aus pastöser Masse eingerichtet, wobei die Formeinrichtung ein Formteil zum Ausgeben des Endlos-Stranges aufweist, dem vorzugsweise direkt eine Fördereinheit zugeordnet ist. Das erfindungsgemäße Form-Modul weist in einer bevorzugten Ausführungsform neben einer Formeinrichtung zum Herstellen geformter Lebensmittel-Produkte, hier zum Formen eines Endlos-Stranges aus pastöser Masse, eine Fördereinheit auf. Mit der Fördereinheit wird der erzeugte Endlos-Strang nach seiner Ausgabe in im Wesentlichen unveränderter Ausrichtung weitertransportiert. Die Fördergeschwindigkeit der Fördereinheit ist vorzugsweise auf die Ausgabegeschwindigkeit der Formeinrichtung angepasst, wodurch das Herstellen eines durchgängigen Endlos-Stranges gewährleistet wird.

Bevorzugt ist dem Ende der Fördereinheit des Form-Moduls eine Portioniereinheit zum Unterteilen des Endlos-Stranges in Strangabschnitte zugeordnet. Mit Hilfe der Portioniereinheit wird der Endlos-Strang in Strangabschnitte von bevorzugt gleichmäßiger Länge unterteilt. Die vereinzelten Strangabschnitte werden dann vorzugsweise unmittelbar nach dem Unterteilen von dem Form-Modul abgegeben und von der Fördereinrichtung der Förder-Maschine übernommen. Die übernommenen Strangabschnitte werden zur Weiterverarbeitung abgeführt, insbesondere zu einer sich anschließenden Verpackungsstation. Die vorbeschriebene Ausgestaltung des erfindungsgemäßen Form-Moduls ist zum Erzeugen von Hackfleischportionen eingerichtet. Das Form-Modul wird auch als Hackfleisch-Portioniermodul bezeichnet.

Vorzugsweise weist die Portioniereinheit ein Portioniermesser auf, welches den Förderweg des Endlos-Stranges in vorbestimmten Zeitabständen passiert. Mit der Verwendung bzw. dem Einsatz eines Portioniermessers ist eine einfache Unterteilung des erzeugten Endlos-Stranges bewirkt. Das Portioniermesser ist an einem Ende vorzugsweise über ein Drehlager drehbeweglich aufgenommen und mit seinem freien, radial zum Drehlager beabstandeten Ende entlang einer Messerführung beweglich geführt. Die Rotationsachse des Drehlagers für das Portioniermesser ist bevorzugt im Wesentlichen parallel zur Förderrichtung der Fördereinheit des Form-Moduls ausgerichtet. Das Portioniermesser passiert bzw. durchläuft den Förderweg für den Endlos-Strang im Wesentlichen im rechten Winkel.

Eine andere bevorzugte Weiterbildung des erfindungsgemäßen modularen Systems sieht vor, dass das Formteil der Formeinrichtung als eine Lochscheibe mit einer Vielzahl von Durchtrittsöffnungen ausgebildet ist. Mittels der Lochscheibe mit ihrer Vielzahl an Durchtrittsöffnungen für die pastöse Masse, welche in einem vorbestimmten Muster an der Lochscheibe angeordnet sind, wird ein Endlos-Strang aus einer Vielzahl von einzelnen Endlos-Strängen erzeugt. Die Durchtrittsöffnungen in der Lochscheibe sind bevorzugt außerhalb der Mitte der Lochscheibe angeordnet. Die Durchtrittsöffnungen bilden eine Anordnung an der Lochscheibe aus, welche vorzugsweise die Form eines Rechtecks aufweist.

Gemäß einer alternativen Ausgestaltung des Form-Moduls weist die Formeinrichtung einen Förderkanal zum Formen eines Endlos-Stranges aus pastöser Masse auf, wobei der Förderkanal einen Auslass aufweist, dem eine Portioniereinheit zugeordnet ist. Mit Hilfe des Förderkanals, welcher einen bevorzugt kreisförmigen Querschnitt mit einem Durchmesser im Bereich zwischen etwa 5 bis 20 cm aufweist, wird ein einzelner Endlos-Strang aus pastöser Masse erzeugt. Der erzeugte Endlos-Strang wird mit Hilfe der dem Auslass des Förderkanals zugeordneten Portioniereinheit unterteilt. Dabei werden vorzugsweise kreisförmige Scheiben vorbestimmter Stärke erzeugt, auch bezeichnet als Patty, wobei der Scheibenkörper nach dem Abtrennen vom Endlos-Strang durch den nachgeförderten Endlos-Strang aus dem Auslass des Förderkanals abgegeben wird. Der aus- oder abgegebene Scheibenkörper wird von der Fördereinrichtung der nachgeschalteten Förder-Maschine übernommen. Der Auslass des Förderkanals ist vorzugsweise im Nahebereich des Anfangs bzw. des Aufnahmebereichs der Fördereinrichtung der Förder-Maschine positionierbar.

Die Portioniereinheit weist ein Portioniermesser auf, welches den Förderweg des Förderkanals in vorbestimmten Zeitabständen passiert und eingerichtet ist, den Endlos-Strang der Lebensmittel-Masse vor dem Austreten aus dem Förderkanal in Strangabschnitte zu unterteilen. Das Durchdringen bzw. Passieren des Endlos-Stranges aus der Lebensmittel-Masse vor Austritt des Stranges aus dem Förderkanal hat den Vorteil, dass das abgetrennte Strangteil nahezu unverändert seine ursprüngliche äußere Form behält. Die erzeugten Scheibenkörper, auch bezeichnet als Patty, weisen somit einen im Wesentlichen gleichmäßigen kreisrunden Querschnitt auf. Bevorzugt passiert bzw. durchdringt das Portioniermesser den Endlos-Strang der Lebensmittel-Masse quer zur Förderrichtung der Lebensmittel-Masse im Förderkanal. Die Stärke der erzeugten Scheibenkörper wird durch die Strömungsgeschwindigkeit der Lebensmittel-Masse im Förderkanal und die Rotationsgeschwindigkeit des Portioniermessers und dessen Klingenanzahl bestimmt. Das Portioniermesser weist bevorzugt zwei Klingen auf. Das Fördern der pastösen Masse durch den Förderkanal kann ein kontinuierlicher Vorgang sein oder das Fördern kann in intermittierender Abfolge durchgeführt werden, wobei das Abtrennen des Strangabschnittes vom Endlos-Strang zwischen zwei Förderbewegungen erfolgt.

Eine andere alternative Ausgestaltung des Form-Moduls sieht vor, dass die Formeinrichtung eine Portioniereinheit zum Formen kugelförmig geformter Produkte aufweist. Die Portioniereinheit weist bevorzugt eine Vielzahl von dicht nebeneinander angeordneten Produkt-Auslässen auf. Mit einer solchen erfindungsgemäß ausgebildeten Formeinrichtung, auch bezeichnet als Bällchen-Former, werden vorzugsweise mehrere Kugeln oder Bällchen gleichzeitig aus der Lebensmittel-Masse erzeugt. Die ausgegebenen Kugeln sind vorzugsweise in einer Reihe nebeneinander angeordnet und berühren sich oder sind dicht nebeneinander angeordnet. Die Produkt-Auslässe der Portioniereinheit des Form-Moduls sind, nach dem Koppeln bzw. Verbinden von Form-Modul und Förder-Maschine, bevorzugt unmittelbar in der Nähe des Aufnahmebereichs der Fördereinrichtung der nachgeschaltet anordbaren Förder-Maschine angeordnet. Die ausgegebenen kugelförmigen Produkte werden vorzugsweise direkt an die Fördereinrichtung der Förder-Maschine ab- bzw. übergegeben.

Bevorzugt weist die Portioniereinheit eine Schneideinrichtung mit vorzugsweise zwei aktiv bewegbaren Schneid- und/oder Formplatten auf. Mittels der zwei zueinander aktiv bewegbaren Schneid- und/oder Formplatten kann eine bevorzugt gleichmäßige Formgebung der aus der pastosen Lebensmittel-Masse zu erzeugenden bzw. zu formenden Kugeln gewährleistet werden. Vorzugsweise werden beide Schneid- und/oder Formplatten gleichzeitig bewegt. Das führt insbesondere an den vorderen und hinteren Enden der zu erzeugenden Produkte zu einer verbesserten kugelförmigen Ausformung. Vorzugsweise sind beide Schneidplatten mit einer gemeinsamen Antriebseinrichtung gekoppelt, wodurch der Antriebsweg der Antriebseinrichtung auf vorteilhafte Weise verringert werden kann.

Gemäß einer Weiterbildung des Form-Moduls weist die Formeinrichtung einen Füllstromteiler auf, welcher der Portioniereinheit im Förderweg für die pastöse Masse vorgeschaltet ist. Der Füllstromteiler, welcher in Förderrichtung stromaufwärts der Portioniereinheit angeordnet ist, sorgt für eine gleichmäßige Verteilung der pastösen Lebensmittel-Masse eines im Förderkanal strömenden Gesamt-Förderstroms auf mehrere einzelne Förderströme. Die einzelnen Förderströme sind jeweils mit voneinander abgetrennten Bereichen der Portioniereinheit gekoppelt. Der Füllstromteiler bewirkt eine verbesserte Massen- oder Gewichtsverteilung der zu fördernden pastösen Lebensmittel-Masse aus dem Gesamt-Förderkanal auf die einzelnen Förderkanäle zur Portioniereinheit. Die aus den Auslässen der Portioniereinheit ausgegebenen Kugeln oder Bällchen weisen auf vorteilhafte Weise nahezu ein identisches Gewicht und eine identische Größe auf. Der Füllstromteiler ist vorzugsweise ähnlich einer Flügelzellenpumpe mit einem sich in einer Kammer bewegenden Rotor ausgebildet, wobei die Rotationsachse des Rotors parallel versetzt zur Mittenachse zur Kammer angeordnet ist und der Rotor verstellbare Flügelelemente aufweist.

Das erfindungsgemäße System sieht vor, dass die Förder-Maschine in Förderrichtung der pastösen Lebensmittel-Masse des Form-Moduls nachgeschaltet ist. Die Förder-Maschine, welche im Förderweg der pastösen Lebensmittel-Masse stromabwärts des Form-Moduls angeordnet ist, übernimmt vorzugsweise die mittels des Form-Moduls erzeugten Lebensmittel-Produkte und transportiert diese zur Weiterverarbeitung ab. Bevorzugt ist die Fördereinrichtung der Förder-Maschine im Nahbereich des Auslasses bzw. der Auslässe des Form-Moduls unmittelbar angeordnet, sodass die erzeugten Produkte direkt ohne Zwischenschaltung weiterer Fördermittel vom Form-Moduls an die Förder-Maschine überführt werden.

Gemäß einer bevorzugten Ausgestaltung des erfindungsgemäßen modularen Systems zum Formen und Fördern von Lebensmittel-Produkten ist eine Füll-Maschine vorgesehen, welche im Förderweg der pastösen Lebensmittel-Masse stromaufwärts dem Form-Modul anordbar ist. Die Füll-Maschine umfasst vorzugsweise einen Fülltrichter zum Eingeben und Aufnehmen der pastösen Lebensmittel-Masse, wie zum Beispiel Fleischbrät, sowie eine Förderpumpe zum Fördern der pastösen Lebensmittel-Masse in Förderrichtung durch einen Förderleitung, wobei in der Förderleitung ein Fleisch-Wolf angeordnet ist. Die Förderpumpe ist zudem fluidleitend mit einem Förderkanal der verschiedenen Form-Module verbindbar.

Vorzugsweise ist das Form-Modul nach einer der vorstehend beschriebenen bevorzugten Ausführungsformen und die Förder-Maschine ebenfalls gemäß einer der vorstehend beschriebenen, bevorzugten Ausführungsformen ausgebildet.

Hierbei zeigen:
- Fig. 1:: eine perspektivische Ansicht einer ersten Ausführungsform eines Systems zum Formen und Fördern von Lebensmittel-Produkten;
- Fig. 2:: eine perspektivische Darstellung einer zweiten Ausführungsform eines Systems;
- Fig. 3:: eine perspektivische Ansicht einer weiteren Ausführungsform eines Systems;
- Fig. 4:: eine perspektivische Ansicht einer Förder-Maschine;
- Fig. 5:: eine perspektivische Darstellung einer ersten Ausführungsform einer Füll-Maschine;
- Fig. 6:: eine perspektivische Ansicht einer weiteren Ausführungsform der Füll-Maschine;
- Fig. 7 bis 12:: perspektivische Ansichten verschiedener Ausführungsformen von Kopplungsmittel zum mechanischen Verbinden von Form-Modul und Förder-Maschine;
- Fig. 13 und 14:: perspektivische Ansichten von Kopplungsmittel zum Herstellen einer elektrischen und/oder fluidleitenden Verbindung;
- Fig. 15:: eine perspektivische Ansicht einer weiteren Ausführungsform eines Systems zum Formen und Fördern von Lebensmittel-Produkten;
- Fig 16:: eine perspektivische Darstellung einer anderen Ausführungsform des erfindungsgemäßen Systems;
- Fig. 17:: eine perspektivische Ansicht gemäß einer anderen Ausführungsform eines Systems;
- Fig 18:: eine perspektivische Darstellung eines modularen Systems bestehend aus einer Förder-Maschine und mehreren verschiedenen Form-Modulen;
- Fig.19:: eine perspektivische Darstellung der Förder-Maschine mit ihren Kopplungsmittel gemäß der Ausführungsform nach Fig 18, und
- Fig.20: eine perspektivische Darstellung einer weiteren Ausführungsform des erfindungsgemäßen modularen Systems zum Formen und Fördern von Lebensmittel-Produkten.

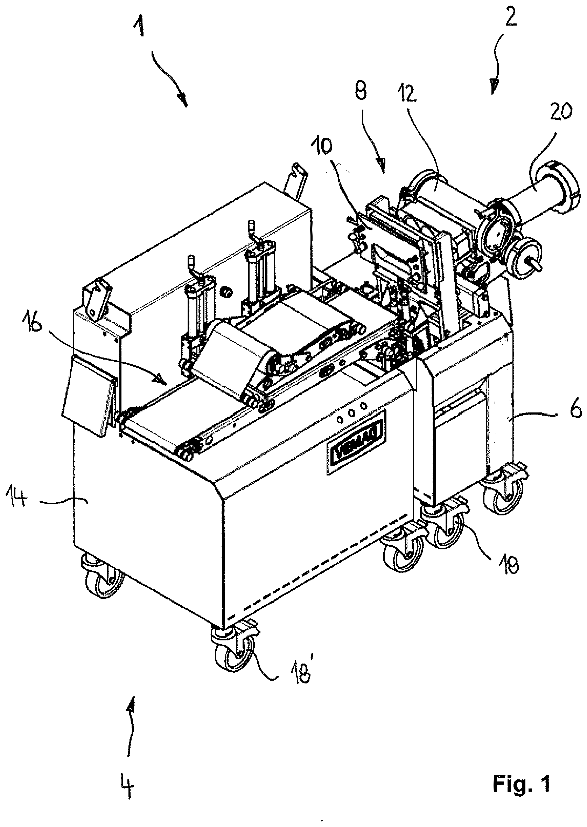

In Fig. 1 ist eine erste Ausgestaltung eines Systems zum Formen und Fördern von Lebensmittel-Produkten aus pastöser Masse 1 abgebildet. Die Form- und Fördervorrichtung 1 weist ein Form-Modul 2 zum Herstellen geformter Lebensmittel-Produkte aus der pastösen Masse auf. In Förderrichtung der pastösen Lebensmittel-Masse ist dem Form-Modul 2 eine Förder-Maschine 4 nachgeschaltet.

Das Form-Modul 2 weist ein Maschinen-Gestell 6 auf, an dem eine Formeinrichtung 8 angeordnet ist. Die Formeinrichtung 8 weist eine Portioniereinheit 10 auf, welche zum Formen kugelförmig geformter Produkte eingerichtet ist. Die Formeinrichtung 8 weist einen Füllstromteiler 12 auf, der im Förderweg der pastösen Lebensmittel-Masse stromaufwärts der Portioniereinheit 10 angeordnet ist; also der Füllstromteiler 12 in Förderrichtung der pastösen Lebensmittel-Masse vor der Portionereinheit 10 angeordnet ist. Die Portioniereinheit 10 weist eine nicht näher dargestellte Schneideinrichtung auf, mit der kontinuierlich die durch den Füllstromteiler 12 auf einzelne Förderströme aufgeteilte pastöse Lebensmittel-Masse zu den kugelförmigen Produkten geformt wird.

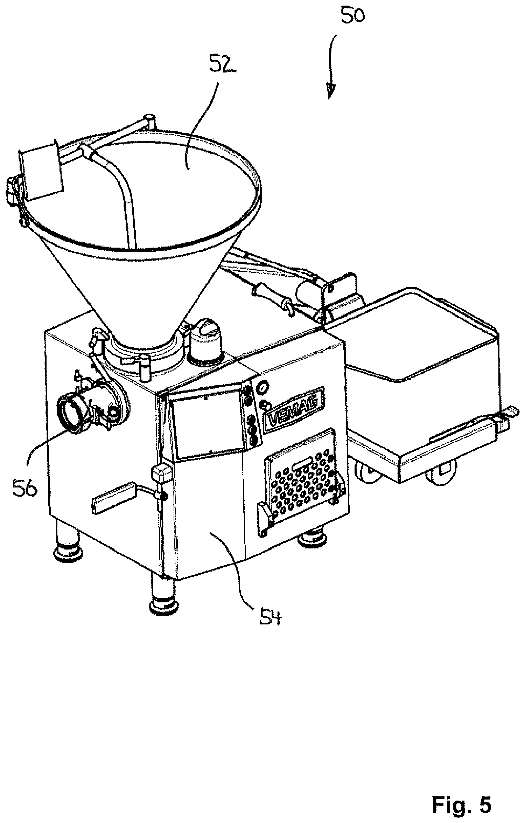

Die mittels des Form-Moduls 2 geformten und ausgegebenen Produkte werden direkt von der Förder-Maschine 4 übernommen, welche ein Maschinen-Gestell 14 aufweist. An dem Maschinen-Gestell 14 ist eine Fördereinrichtung 16 zum Fördern der durch das Form-Modul ausgegebenen Lebensmittel-Produkte angeordnet. Am Maschinen-Gestell 6 des Form-Moduls 2 und dem Maschinen-Gestell 14 der Förder-Maschine 4 sind mehrere Rollen 18, 18' angeordnet, wodurch die Maschinen 2, 4 verfahrbar sind. Die verfahrbaren und separat zueinander ausgebildeten Maschinen 2, 4 werden über nachfolgend näher beschriebene Kopplungsmittel sowohl mechanisch miteinander gekoppelt als auch elektrisch und/oder fluidleitend miteinander verbunden. Das Form-Modul 2 weist zudem eine Förderleitung 20 auf, über die eine dem Form-Modul 2 vorgeschaltete Füll-Maschine 50 (Fig. 5) mit der Formeinrichtung 8 verbunden ist.

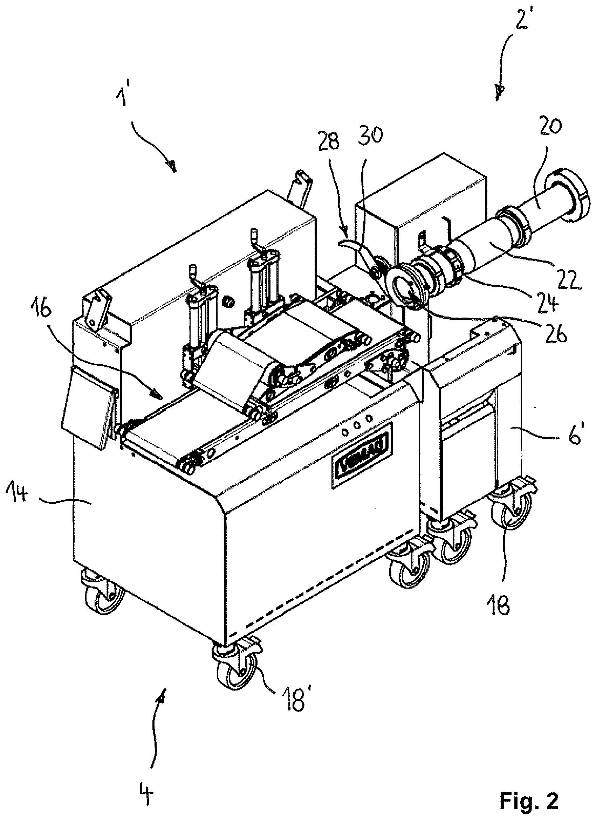

Figur 2 zeigt eine Form- und Fördervorrichtung 1', welche ein Form-Modul 2' und eine Förder-Maschine 4 umfasst. Das Form-Modul 2' weist ebenfalls ein Maschinen-Gestell 6' mit daran angeordneten Rollen 18, 18' auf. Am Maschinen-Gestell 6' ist eine Formeinrichtung 8' angeordnet, die einen an der Förderleitung 20 angeordneten Förderkanal 22 mit einer Düse 24 zum Formen eines Endlos-Stranges aus der pastösen Lebensmittel-Masse aufweist. Dem Auslass 26 des Förderkanals 22 ist eine Portioniereinheit 28 zugeordnet, mit der ein im Förderkanal 22 geförderter Endlos-Strang in Strangabschnitte mit einem kreisförmigen Querschnitt unterteilt wird. Die Portioniereinheit 28 weist ein Portioniermesser 30 mit zwei Klingen auf, das den Förderweg des Förderkanals 22 in vorbestimmten Zeitabständen passiert und den Endlos-Strang der Lebensmittel-Masse vor dem Austreten aus dem Förderkanal 22 in besagte Strangabschnitte unterteilt. Durch die im Förderkanal 22 nachströmende pastöse Lebensmittel-Masse werden die einzelnen abgetrennten Strangabschnitte am Auslass 26 des Förderkanals direkt auf einen Aufnahmebereich 43 der Fördereinrichtung 16 der stromabwärtsangeordneten Förder-Maschine 4 aufgegeben. Auch das Form-Modul 2' und die Förder-Maschine 4 sind untereinander über entsprechende Kopplungsmittel mechanisch und auch elektrisch bzw. fluidleitend miteinander gekoppelt bzw. verbunden.

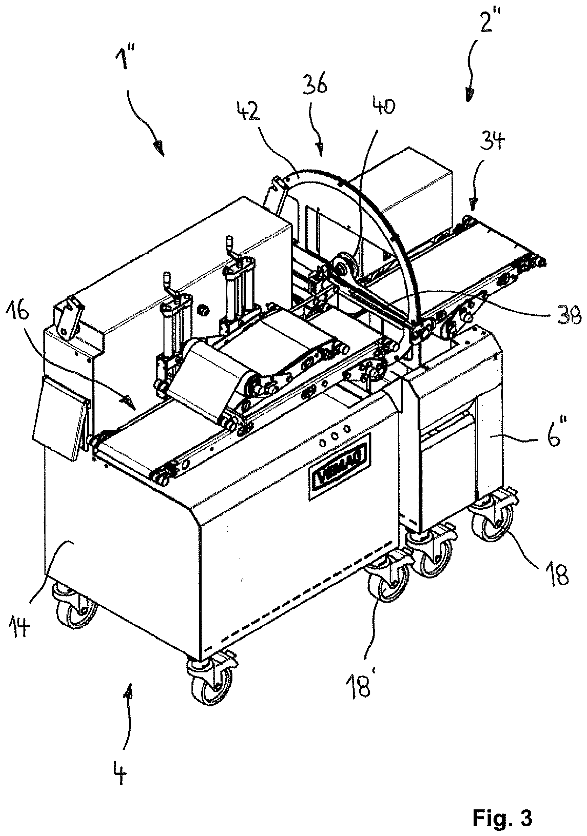

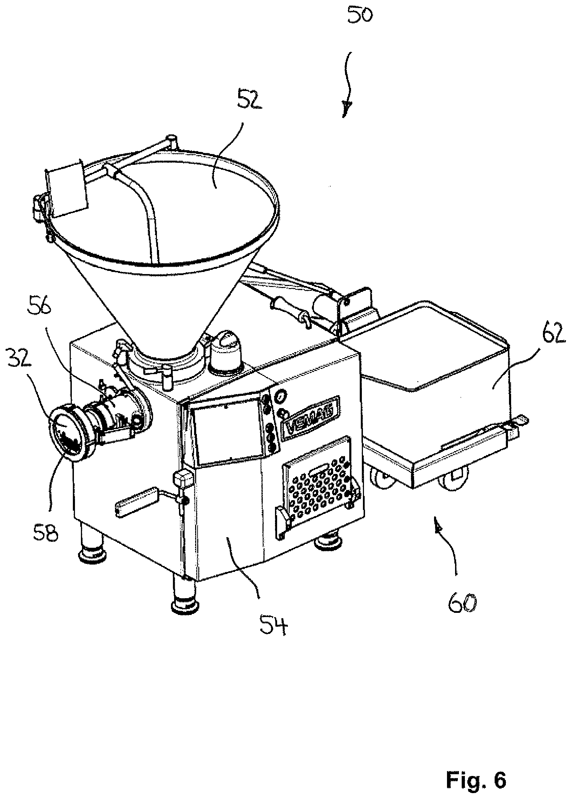

In Figur 3 ist eine Form- und Fördervorrichtung 1" dargestellt, welche ein Form-Modul 2" und die in den vorherigen Ausführungsformen offenbarte Förder-Maschine 4 umfasst. Die Förder-Maschine 4 der gezeigten Form- und Fördervorrichtungen 1 bis 1" (Fig. 1 bis 3) bildet dabei ein sogenanntes Basismodul der Form- und Fördervorrichtung 1, 1', 1". Das Form-Modul 2" weist ein Maschinen-Gestell 6" auf, an dem eine Formeinrichtung 8" angeordnet ist. Die Formeinrichtung 8" ist zum Formen eines Endlos-Stranges aus pastöser Lebensmittel-Masse eingerichtet, wobei die Formeinrichtung 8" ein Formteil 32 (Figur 6) zum Ausgeben des Endlos-Stranges aufweist. Dem Formteil 32 ist unmittelbar eine Fördereinheit 34 zugeordnet mit der der erzeugte Endlos-Strang über eine vorbestimmte Wegstrecke in etwa horizontaler Richtung gefördert wird. Dem Ende der Fördereinheit 34 ist eine Portioniereinheit 36 zum Unterteilen des Endlos-Stranges in Strangabschnitte zugeordnet. Die Portioniereinheit 36 umfasst wenigstens ein Portioniermesser 38, das an einem Ende über ein Drehlager 40 drehbeweglich aufgenommen ist und mit seinem radial nach außen gerichteten Ende entlang einer Messerführung 42 umlaufend geführt ist. Das Portioniermesser 38 wird kontinuierlich angetrieben und ist derart dem Ende der Fördereinheit 34 zugeordnet, welches ein endlos umlaufendes Förderband aufweist, dass das Portioniermesser 38 den Förderweg des Endlos-Stranges in vorbestimmten Zeitabständen passiert. Dabei ist das Portioniermesser 38 eingerichtet, den erzeugten Endlos-Strang in Strangabschnitte gleicher Länge zu unterteilen. Das Formteil 32 der Formeinrichtung 8" (Fig. 6) ist als eine Lochscheibe mit einer Vielzahl von Durchtrittsöffnungen ausgebildet.

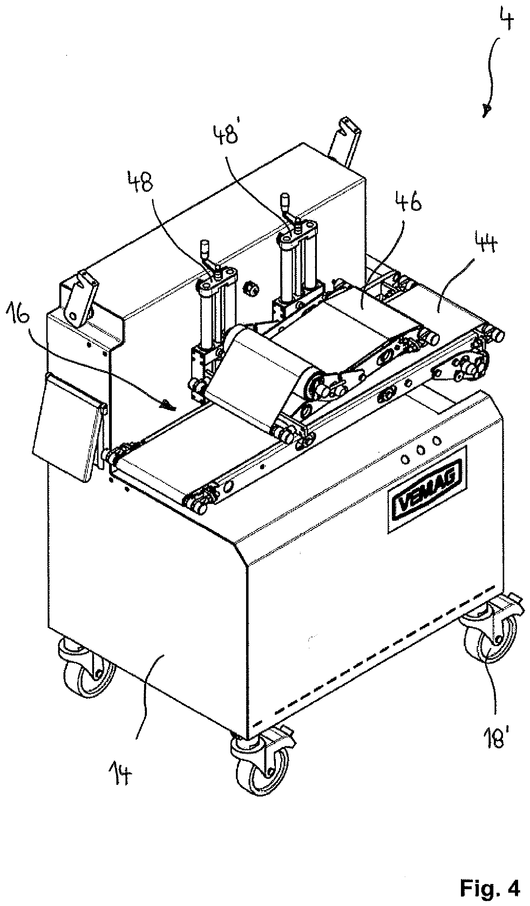

Figur 4 zeigt die Förder-Maschine 4 als Basismodul der Form- und Fördervorrichtungen 1 bis 1".Mit der Förder-Maschine 4 als Basis Modul können die verschiedenen in den Figuren 1 bis 3 gezeigten Form-Module 2 bis 2" beliebig gekoppelt werden. Die Förder-Maschine 4 weist wiederum das Maschinen-Gestell 14 und die am Maschinen-Gestell 14 angeordnete Fördereinrichtung 16 für den Abtransport der durch das Form-Modul 2" erzeugten dreidimensionalen Lebensmittel-Produkte aus der Lebensmittel-Masse auf. Am Maschinen-Gestell 14 der Förder-Maschine 4 sind Rollen 18' angeordnet, mit denen die Verfahrbarkeit auch der Förder-Maschine 4 gewährleistet wird.

Die Fördereinrichtung 16 der Förder-Maschine 4 weist zwei endlos umlaufende Förderelemente 44, 46 auf. Die Förderelemente 44, 46 sind übereinander angeordnet und gegenläufig angetrieben. Das Förderelement 44 ist als Abtransportband ausgebildet, mit dem die durch die verschiedenen Form-Module 2, 2',2" erzeugten Lebensmittel-Produkte aus der pastösen Lebensmittel-Masse direkt übernommen werden. Das obere Förderelement 46 ist ein Plättband, das in Abhängigkeit von der Art und Form der erzeugten Lebensmittel-Produkte in unterschiedlichen Abständen oberhalb des Förderelementes 44 angeordnet wird. Die Höhenverstellung des Förderelementes 46 erfolgt mit Hilfe von Hand betätigbarer Verstellmittel 48, 48'. Die Stelleinrichtungen 48, 48' sind fest mit dem Maschinen-Gestell 14 der Förder-Maschine 4 verbunden, über die ebenfalls die Neigung beider Förderelemente 44, 46 zur horizontalen Ebene verändert werden kann. In einer alternativen Ausgestaltung erfolgt die Höhenverstellung des als Plättband ausgebildeten Förderelementes 46 mittels eines motorischen Stellantriebs.

Figur 5 zeigt eine Füll-Maschine 50, welche einen Fülltrichter 52 und eine im Gehäuse 54 angeordnete, nicht näher dargestellte Förderpumpe umfasst, über die das in den Fülltrichter 52 eingegebene Lebensmittel vorzerkleinert und in Förderrichtung einer Förderleitung 56 gefördert wird. Innerhalb der Förderleitung 56 ist ein nicht gezeigter Fleischwolf angeordnet. Mit dem Fleischwolf wird die in der Förderpumpe vorzerkleinerte Lebensmittel-Masse gewolft und somit eine pastöse Lebensmittel-Masse gleichmäßiger Konsistenz erzeugt. Mit der Förderleitung 56 wird die in den Fig. 1 und 2 gezeigte Förderleitung 20 gekoppelt.

Die in Figur 6 gezeigte Füll-Maschine unterscheidet sich zu der vorherigen Ausführungsform durch ein an der Rohrleitung 56 montiertes Formteil 32, welches als Lochscheibe mit einer Vielzahl von Durchtrittsöffnungen 58 ausgebildet ist. Der mit den Durchtrittsöffnungen 58 ausgerüstete Wandbereich ist an der Lochscheibe in der gezeigten Ausführungsform außermittig angeordnet. Neben der Füll-Maschine 50 ist ein Fleischbrätwagen 60 angeordnet, der einen Aufnahmebehälter 62 für Fleischteile aufweist. Der Fleischbrätwagen 60 ist an einer nicht näher gezeigten Hebevorrichtung koppelbar, mittels der der Aufnahmebehälter 62 angehoben und verschwenkt wird, so dass die im Aufnahmebehälter 62 befindlichen Fleischstücke in den Fülltrichter 52 der Füll-Maschine 50 überführt werden. Nachdem der Fleischbrätwagen 60 entleert wurde, wird dieser durch einen anderen, mit Fleischteilen voll bestückten Fleischbrätwagen ausgetauscht bzw. ersetzt.

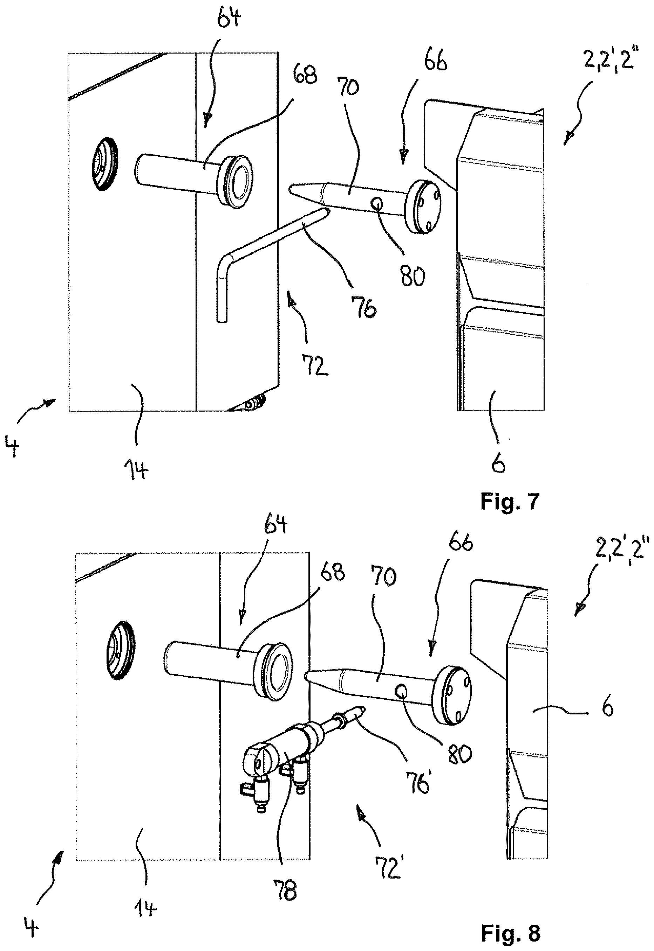

In den Figuren 7 bis 12 sind Ausführungsbeispiele für Kopplungsmittel zum mechanischen Verbinden der Form-Module 2, 2', 2" mit der Förder-Maschine 4 gezeigt. An dem Form-Modul 2, 2', 2" und der Förder-Maschine 4 ist jeweils ein Kopplungsmittel angeordnet, welche korrespondierend bzw. komplementär zueinander ausgebildet sind. Durch die korrespondierende Ausgestaltung bzw. die aufeinander abgestimmte Formgebung der Kopplungsmittel 64, 66 erfolgt beim Verbinden der Kopplungsmittel ein selbsttätiges Ausrichten der miteinander zu koppelnden Maschinen 2, 2', 2", 4 quer zur Förderrichtung der von dem Form-Modul 2, 2', 2" in Richtung der Förder-Maschine 4 geförderten pastösen Lebensmittel-Masse. Über die Kopplungsmittel 64, 66 werden das Form-Modul und die Förder-Maschine in Förderrichtung fluchtend hintereinander ausgerichtet. An der Förder-Maschine 4 ist ein als Hülsenkörper 68 ausgebildetes Aufnahmeteil als Kopplungsmittel 64 angeordnet. Das Form-Modul 2, 2', 2" weist als Kopplungsmittel 66 ein als Dorn 70 ausgebildetes Gegenstück auf, wobei der Dorn 70 mit seinen Außendurchmesser auf den Innendurchmesser des Hülsenkörpers abgestimmt ist. Hülsenkörper 68 und Dorn 70 der beiden miteinander koppelbaren Maschinen 2, 2', 2", 4 werden miteinander in Kontakt gebracht, in dem der Dorn 70 in den Hülsenkörper 68 eingeschoben bzw. der Hülsenkörper 68 über den Dorn 70 geschoben wird. Das Koppeln bzw. Verbinden des Dornes 70 mit dem Hülsenkörper 68 erfolgt durch eine Relativbewegung der beiden miteinander koppelbaren Maschinen 2, 2', 2", 4. Die Bewegungsrichtung während des Kopplungsvorganges und damit auch die Einsteckrichtung des Dornes 70 verlaufen in den gezeigten Ausführungen parallel zur Förderrichtung der pastösen Lebensmittel-Masse.

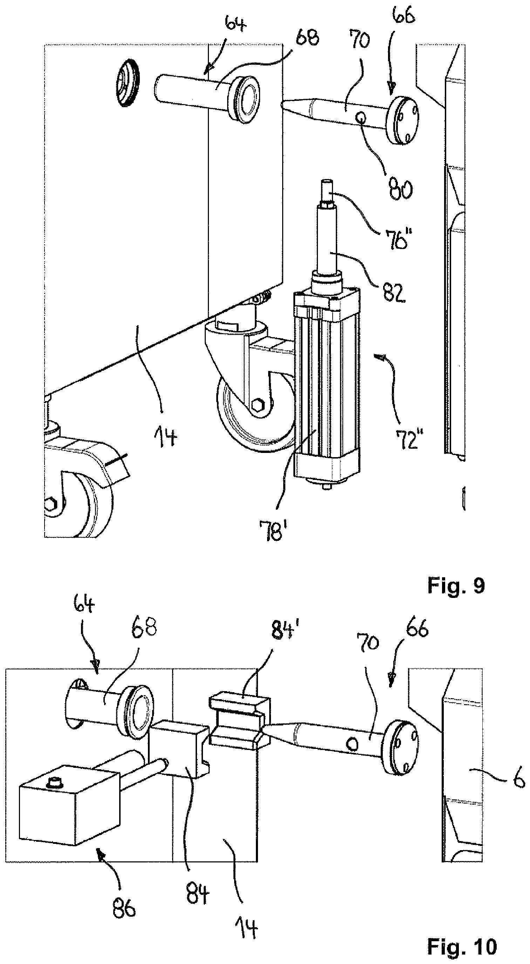

Den Kopplungsmittel 64, 66 der miteinander koppelbaren Maschinen ist eine Arretiereinrichtung 72, 72', 72", 74, 74', 74" zugeordnet. Über die Arretiereinrichtungen werden die Kopplungsmittel 64, 66 der beiden Maschinen, sofern sich diese beide miteinander in Eingriff und in der Kopplungsposition befinden, zueinander arretiert. Die in den Fig. 7 bis 9 gezeigten Arretiereinrichtungen 72 bis 72" basieren auf der grundlegenden Funktion, eine Formschlussverbindung zwischen den Arretierelementen 76, 76', 76" und dem Kopplungsmittel 66 herzustellen. Durch den Formschluss zwischen dem Arretierelement 76 bis 76" und dem Kopplungsmittel 66 wird das Kopplungsmittel 66 in Einsteckrichtung zum Kopplungsmittel 64 und damit gleichzeitig die beiden koppelbaren Maschinen 2, 2', 2", 4 miteinander fixiert und ein Herausziehen des Dornes 70 aus dem Hülsenkörper 68 verhindert. Das Arretierelement 76 ist in der in Fig. 7 gezeigten Ausführungsform als manuell betätigbarer Verriegelungsstift ausgebildet, der in die Ausnehmung 80 am Dorn 70 eingreift. Das Arretierelement 76' der in Fig. 8 abgebildeten Arretiereinrichtung 72' ist ein Verriegelungszapfen, der an einem Stellantrieb 78 mit einem Pneumatikzylinder angeordnet ist, über den das Arretierelement 76' zwischen einer Arretierposition und einer Freigabeposition für die Kopplungsmittel 64, 66 hin und her bewegbar ist. In der Arretierposition greift das als Verriegelungszapfen ausgebildete Arretierelement 76' formschlüssig in die Ausnehmung 80 am Dorn 70 ein. Der in Fig. 9 gezeigte Stellantrieb 78' ist ein Elektrozylinder, an dessen verstellbaren Kolben 82 das als Verriegelungszapfen ausgebildete Arretierelement 76" angeordnet ist.

Das Arretierelement 76" greift ebenfalls in der Arretierposition im Wesentlichen senkrecht in die Ausnehmung 80 am als Dorn 70 ausgebildeten Kopplungsmittel 66 ein.

In den Figuren 9 bis 12 sind Ausführungsbeispiele von Arretiereinrichtungen 74 bis 74" abbgebildet, die anstelle eines formschlüssig mit dem Kopplungsmittel 66 korrespondierenden Arretierelement zwei als Klemmbacken ausgebildete Arretierelemente 84, 84' aufweisen. Mittels der Arretierelemente 84, 84' wird eine auf einem Reibschluss basierende haltende Wirkverbindung zwischen den Klemmbacken und dem Dorn 70 erzeugt. Zum Erzeugen der Reibschlussverbindung zwischen Dorn und Klemmbacken ist zumindest eines der Arretierelemente 84, 84' verstellbeweglich mit einem Stellantrieb 86, 86', 86" verbunden.

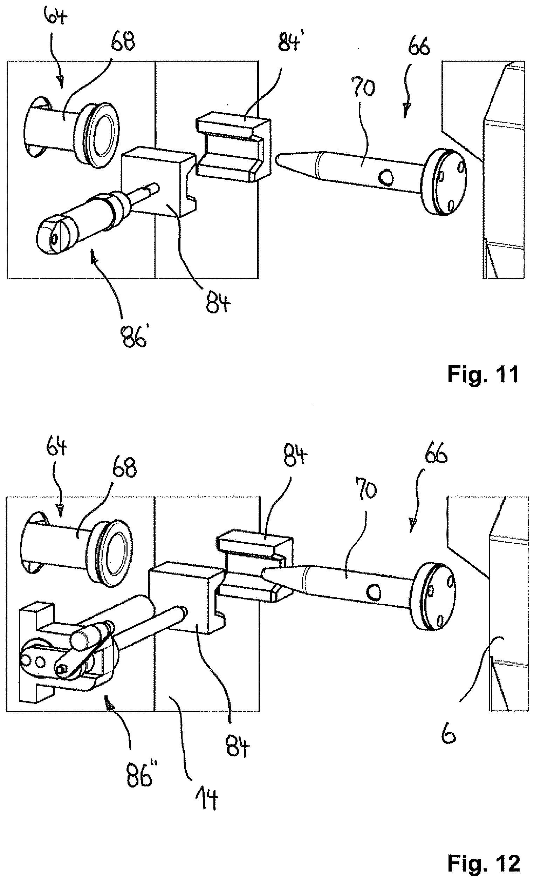

Der in Figur 10 gezeigte Stellantrieb 86 ist ein Elektro-Spindelantrieb, mit dem das Arretierelement 84 quer zur Einsteckrichtung des Dornes 70 in den Hülsenkörper 68 verstellbar ist und gegen das gegenüberliegend angeordnete, als Klemmbacken ausgebildete Arretierelement 84' gedrückt wird. Wie aus den Figuren 11 und 12 ersichtlich kann der zum Erzeugen der Reibschlussverbindung zwischen Dorn und Arretierelemente 84, 84' eingesetzte Stellantrieb 86', 86" als Pneumatikzylinder oder als manuell betätigbarer Spindelantrieb ausgebildet sein. Sämtliche Figuren 7 bis 12 sind Explosionsdarstellungen und zeigen die Arretiereinrichtungen 72 bis 74" außerhalb des Gehäuses der Maschinen 2, 2', 2", 4. In Abhängigkeit davon, welche der koppelbaren Maschinen mit dem als Hülsenkörper 68 ausgebildeten Kopplungsmittel und dem als Dorn 70 ausgebildeten Kopplungsmittel 66 ausgerüstet ist, werden die Arretiereinrichtungen 72 bis 74' innerhalb des Gehäuses dem oder der den Hülsenkörper 68 aufweisenden Form-Modul oder Förder-Maschine angeordnet.

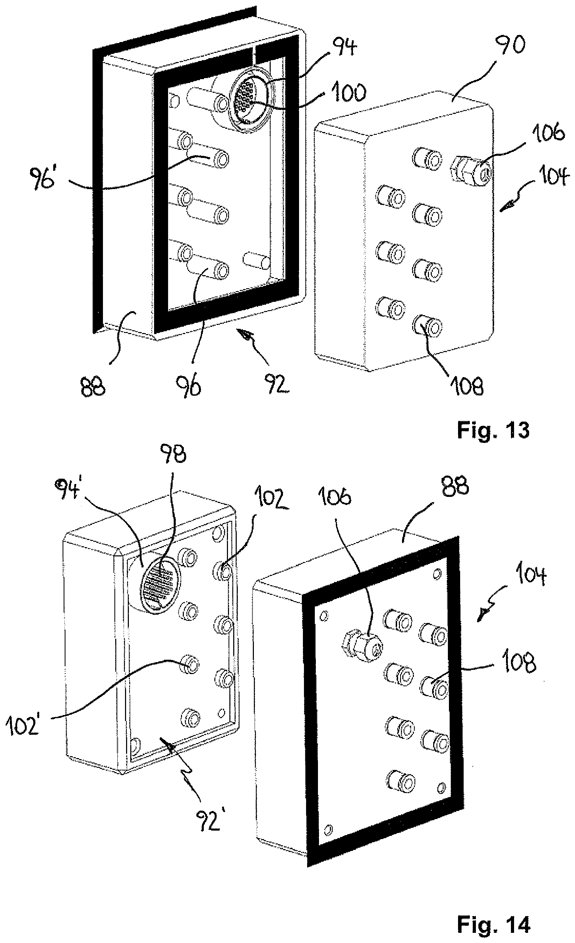

In den Figuren 13 und 14 sind Kopplungsmittel 88, 90 zum Herstellen von elektrischen und/oder fluidleitenden Verbindungen zwischen den miteinander koppelbaren Maschinen 2, 2', 2", 4 gezeigt. Die Kopplungsmittel 88, 90 sind jeweils einmal von ihrer Vorderseite und ihrer Rückseite abgebildet. Das Kopplungsmittel 88 ist vorliegend als Aufnahmeteil für das als einsteckbares Gegenstück ausgebildete Kopplungsmittel 90 ausgebildet. Das die Funktion einer Aufnahme aufweisende Kopplungsmittel 88 weist auf seiner der dem Kopplungsmittel 90 zugewandten Kontaktseite 92 einen Elektro-Steckverbinder 94 in Form einer Multipol-Steckaufnahme auf. Zudem sind auf der Kontaktseite 92 des Kopplungsmittels 88 eine Vielzahl von fluidleitenden Steckverbindern 96, 96' angeordnet. Das Kopplungsmittel 90 weist auf seiner dem als Aufnahmeteil ausgebildeten Kopplungsmittel 88 zugewandten Kontaktseite 92' einen Elektro-Steckverbinder 94' auf, dessen Steckpins in die Steckaufnahmen 100 des Elektro-Steckverbinders 94 beim Fügen der Kopplungsmittel 88, 90 eingeschoben werden. Die Steckverbinder 102, 102' für eine fluidleitende Verbindung auf der Kontaktseite 92' des Kopplungsmitteln 90 bilden beim Fügen der Kopplungsmittel 88, 90' eine abdichtende Verbindung mit den Steckverbindern 96, 96' des Kopplungsmittels 88 aus. An den Rückseiten 104, 104' der Kopplungsmittel 88, 90 sind jeweils Anschlüsse 106, 108 für jeweils mit dem Kopplungsmitteln 88, 90 verbindbare elektrische Stromleiter oder fluidleitende Schlauch-bzw. Rohrleitungen angeordnet. Gleiche Bauteile sind mit denselben Bezugszahlen bezeichnet.

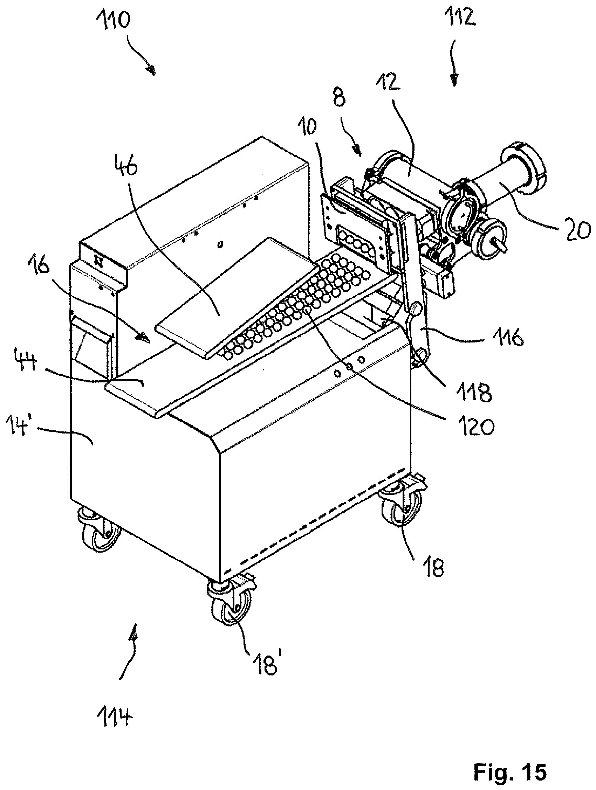

In Fig. 15 ist eine weitere Ausführungsform eines Systems 110 zum Formen und Fördern von Lebensmittelprodukten aus pastöser Masse gezeigt. Das System 110 weist ein Form-Modul 112 zum Herstellen geformter Lebensmittelprodukte und eine in Förderrichtung dem Form-Modul 112 nachgeschaltete Förder-Maschine 114 auf. Im Gegensatz zu den vorher gezeigten Ausführungsformen weist das Form-Modul 112 eine Formeinrichtung 8 auf, welche über eine an der Portioniereinrichtung angeordnete Stützstruktur 116 direkt an einem Halteteil 118 der Förder-Maschine 114 angeordnet, insbesondere daran einhängt wird. Das Halteteil 118 ist am Maschinen-Gestell 14 der Form-Maschine 114 angeordnet. Das Form-Modul 112 ist somit an der als Basismodul ausgebildeten Form-Maschine 114 des gezeigten Systems 110 aufgenommen.

Die in Fig. 15 gezeigte Formeinrichtung 8 ist zum Formen kugelförmiger Produkte eingerichtet und weist eine Förderleitung 20 zum Fördern von pastöser Masse auf, welche beispielsweise von einer in Fig. 5 gezeigten Füllmaschine 50 zur Formeinrichtung 8 gefördert wird. Die in der Förderleitung 20 geförderte pastöse Masse wird einem Füllstromteiler 12 zugeführt, mit dem die pastöse Masse auf mehrere nicht näher gezeigte Förderströme gleichmäßig unterteilt wird. Mittels der dem Füllstromteiler nachgeschalteten Portioniereinheit 10 werden gleichzeitig mehrere kugelförmige Produkte 120 hergestellt, welche nach dem Ausgeben aus der Portioniereinheit 10 in einer Reihe nebeneinander auf das als Abtransportband ausgebildete Förderelement 44 der Förder-Maschine 114 abgelegt werden. Die Förder-Maschine 114 weist ein Maschinen-Gestell 14' auf, an dem eine Fördereinrichtung 16 mit zwei übereinander angeordneten Förderelementen 44, 46 angeordnet ist. Die Förderelemente 44, 46 sind im Abstand relativ zueinander veränderbar, also an der Form-Maschine 114 in ihrer Höhe zum Maschinen-Gestell 14' verstellbar. Das Maschinen-Gestell 14' weist mehrere Rollen 18, 18' zum Verfahren der Form-Maschine 114 über dem Untergrund auf.

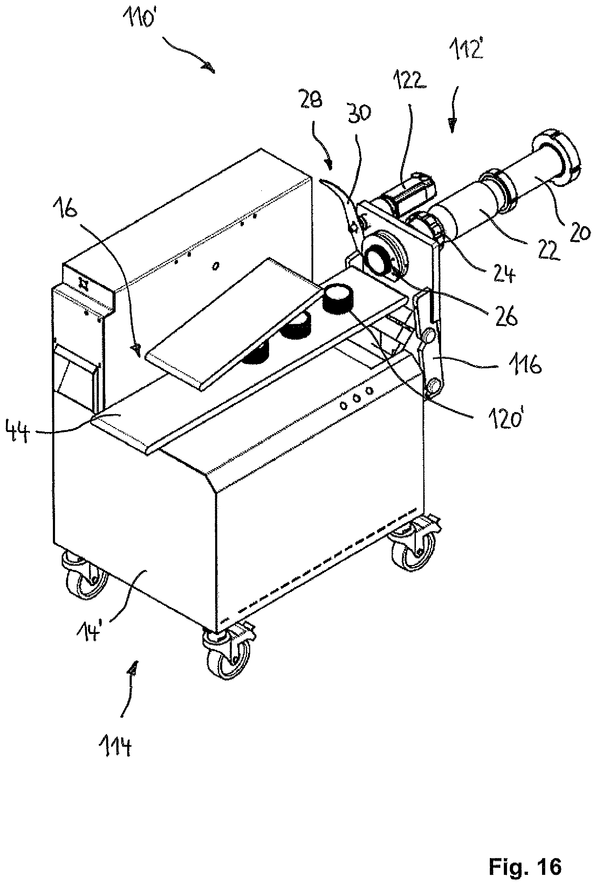

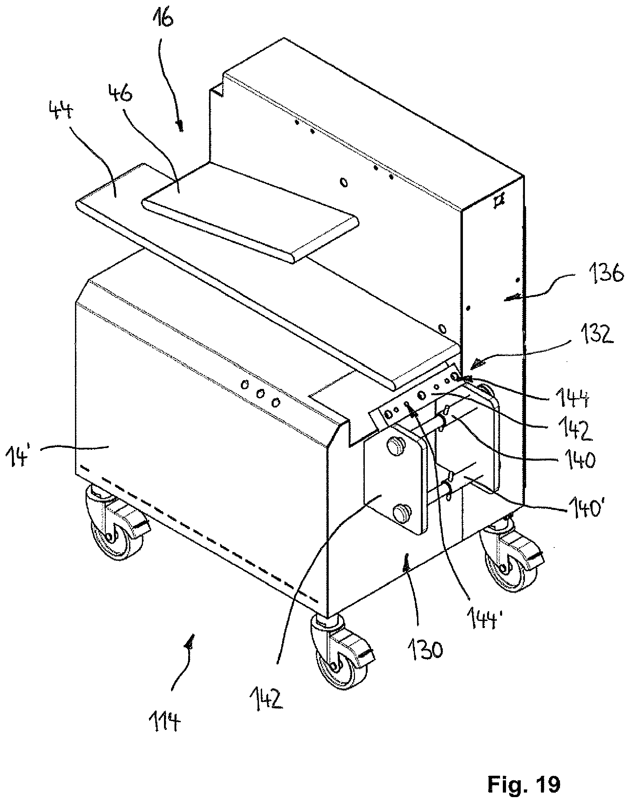

Fig. 16 zeigt ein System 110' zum Formen und Fördern von Lebensmittelprodukten mit einem Form-Modul 112 und einer Form-Maschine 114. Das Form-Modul 112' ist zum Formen scheibenförmiger Produkte 120' mit bevorzugt kreisrundem Querschnitt eingerichtet. Das Form-Modul 112' weist wiederum eine Formeinrichtung 8' auf, welche über eine an der Portioniereinrichtung angeordnete Stützstruktur 116 direkt an einem Halteteil 118 (Fig. 19) der Förder-Maschine 114 angeordnet ist. Das Form-Modul 112' weist eine Formeinrichtung 8' auf, die eine Förderleitung 20 zum Versorgen mit pastöser Masse und einen sich an die Förderleitung anschließenden Förderkanal 22 mit einer Düse 24 zum Formen eines Endlos-Stranges aus der pastösen Lebensmittel-Masse aufweist. Die Förderleitung 20 ist mit einer Füllmaschine 50 (Fig. 5) verbunden. Der Förderkanal 22 weist einen Auslass 26 auf, dem eine Portioniereinheit 28 mit einem Portioniermesser 30 zugeordnet ist. Die Portioniereinheit 28 ist, bezogen auf die Förderrichtung der pastösen Masse im Förderkanal 22, stromaufwärts zum Auslass 26 angeordnet. Das Portioniermesser 30, welches von einem damit gekoppelten Motor 122 angetrieben wird, passiert bzw. tritt durch einen Schlitz im Förderkanal 22 und den Endlos-Strang in einer Ebene etwa senkrecht zur Förderrichtung des Endlos-Stranges, wodurch kontinuierlich Scheibenkörper bzw. scheibenförmige Produkte 120' mit einem kreisförmige Querschnitt, auch bezeichnet als Patty, erzeugt werden. Die erzeugten Scheibenkörper werden durch die im Förderkanal 22 nachströmende pastöse Masse aus dem Auslass 26 herausgedrückt und an einen dem Auslass 26 zugeordneten Aufnahmebereich 43 des Förderelementes 44 der Fördereinrichtung 16 der Form-Maschine 114 übergeben. Hinsichtlich bevorzugter Ausgestaltungen der Form-Maschine 114 wird auf die obigen Ausführungen zu den verschiedenen Ausführungsformen der Form-Maschine verwiesen.

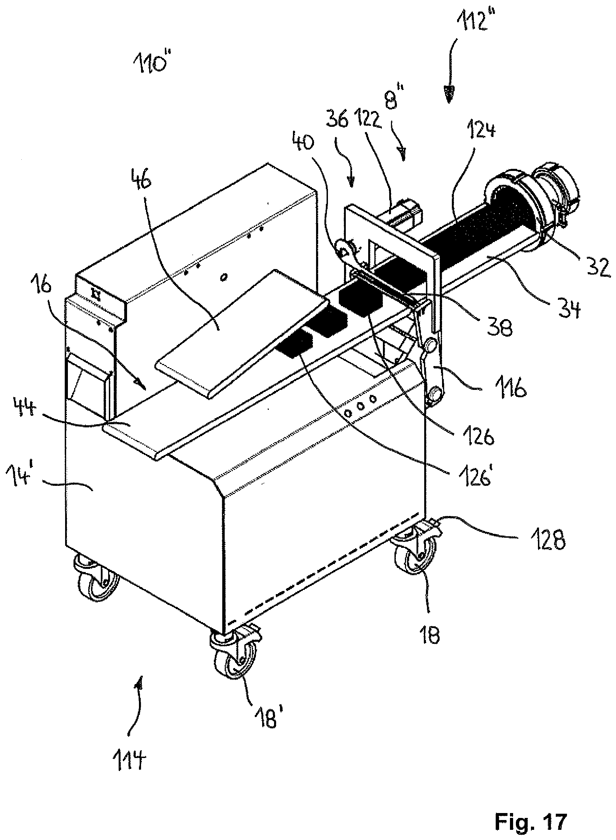

In Fig. 17 ist ein System 110" zum Formen und Fördern von Lebensmittelprodukten aus pastöser Masse dargestellt, das ein Form-Modul 112" und die Form-Maschine 114 aufweist. Ebenso wie die vorherigen Ausführungsformen weist das Form-Modul 112 eine Formeinrichtung 8" auf, die ebenfalls über eine an der Formeinrichtung 8" angeordnete Stützstruktur 116 an dem Halteteil 118 der Förder-Maschine 114 eingehängt wird. Das Form-Modul 112" weist kein separates Maschinengestell zum Aufstellen auf dem Untergrund auf. Die Portioniereinrichtung 8" ist zum Formen eines Endlos-Stranges 124 aus pastöser Lebensmittel-Masse eingerichtet. Die Formeinrichtung 8" weist ein Formteil 32 zum Ausgeben des Endlos-Stranges 124 auf, das mit einer Rohrleitung 56 einer Füllmaschine 50 (Fig. 5) fluidleitend gekoppelt wird. In Förderrichtung des zu erzeugenden Endlos-Stranges ist hinter dem Formteil 32 unmittelbar eine Fördereinheit 34 angeordnet, mit der der erzeugte Endlos-Strang 124 übernommen und eine vorbestimmte Wegstrecke gefördert wird. In einem Abschnitt der Fördereinheit 34 ist eine Portioniereinheit 36 zum Unterteilen des Endlos-Stranges 124 in Strangabschnitte 126, 126' angeordnet. Die Portioniereinheit 36 umfasst ein Portioniermesser 38, das den Förderweg des Endlos-Stranges 124 etwa quer zu dessen Förderrichtung durchquert. Das Portioniermesser 38 ist über ein Drehlager 40 aufgenommen und setzt eine von einem Motor 122 erzeugte Drehbewegung quer zur Förderrichtung des Endlos-Stranges 124 um. Die erzeugten Strangabschnitte 126, 126' werden an eine Fördereinrichtung 16 übergeben, welche der Fördereinheit 34 des Fördermoduls 112" nachgeschaltet ist. Die Fördereinrichtung 16 mit ihren Förderelementen 44, 46 ist an dem Maschinen-Gestell 14' in der Höhe verstellbar angeordnet. In der vorliegend gezeigten Ausführungsform sind an der Unterseite des Maschinengestells 14 Rollen bzw. Rollelemente 18, 18' angeordnet, welche um eine etwa senkrecht zum Untergrund ausgerichtete Drehachse jeweils frei drehbar gelagert sind. Die Rollen bzw. Rollelemente 18, 18' sind über Feststellbremsen 128 arretierbar.

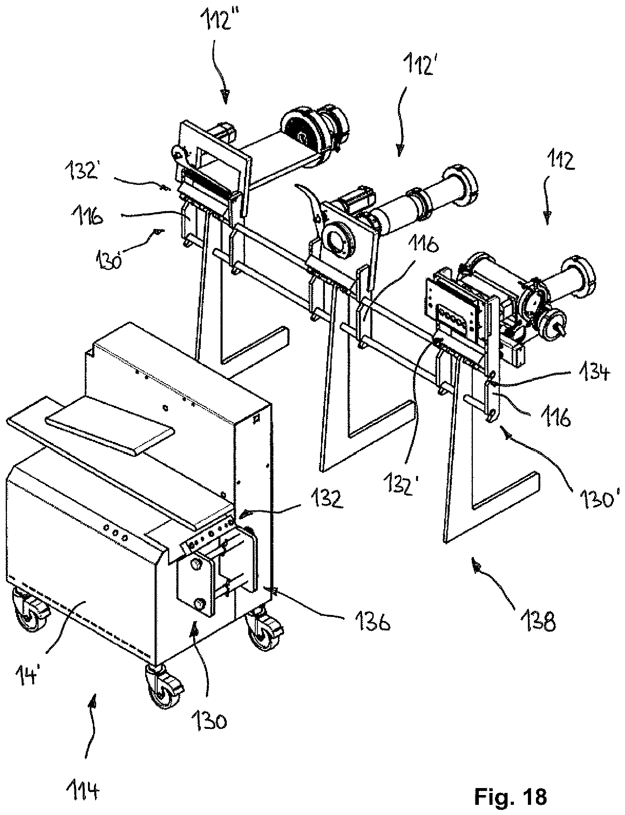

Fig. 18 zeigt eine erfindungsgemäße Förder-Maschine 114 und jeweils daneben angeordnete Form-Module 112, 112', 112". Die Förder-Maschine 114 und die verschiedenen Form-Module 112, 112', 112" bilden ein erfindungsgemäßes modulares System zum Formen und Fördern von Lebensmittel-Produkten aus pastöser Masse aus. Die Förder-Maschine 114 weist Kopplungsmittel 130, 132 zum mechanischen Verbinden und zum Herstellen einer elektrischen und/oder fluidleitenden Verbindung zu den mit der Förder-Maschine 114 als Basismodul koppelbaren Form-Modulen 112, 112', 112" auf. An den Form-Modulen 112, 112', 112" sind jeweils entsprechend mit den Kopplungsmitteln 130, 132 der Förder-Maschine 114 korrespondierend ausgebildete Kopplungsmittel 130', 132' angeordnet. Die Kopplungsmittel 130' zum lösbaren mechanischen Verbinden der Form-Module sind jeweils an der Stützstruktur 116 in Form von Aufnahmeschlitzen 134 ausgebildet. Über die Aufnahmeschlitze 134 werden die Form-Module 112, 112', 112" jeweils in das Halteteil 118 an der Stirnseite 136 der Form-Modul 114 eingehängt.

Form-Module 112, 112', 112", welche nicht verwendet werden, sind an einer als Ständer ausgebildeten Aufnahmeeinrichtung 138 gelagert. Je nachdem, welches Produkt mittels des erfindungsgemäßen modularen Systems hergestellt werden soll, wird ein entsprechendes Form-Modul 112, 112', 112" mit dem Maschinen-Gestell 14' der Förder-Maschine 114 gekoppelt. Über die Kopplungsmittel 132, 132' wird die elektrische und/oder fluidleitende Verbindung zwischen der Formmaschine 114 und den jeweils mit der Formmaschine koppelbaren Form-Modulen 112, 112', 112" gewährleistet.

Fig. 19 zeigt die Förder-Maschine 114 von ihrer Stirnseite 136 aus, an der die Kopplungsmittel 130, 132 für eine Verbindung mit einem jeweiligen Form-Modul 112, 112', 112" angeordnet bzw. ausgebildet sind. Das Kopplungsmittel 130 zum mechanischen Verbinden mit einem der Form-Module 112, 112', 112" weist zwei am Maschinen-Gestell 14' angeordnete Haltestreben 140, 140' auf, welche horizontal ausgerichtet sind und etwa parallel zueinander verlaufen. Die Haltestreben sind über zwei parallel zueinander verlaufende etwa senkrecht am Maschinen-Gestell 14' abstehende Halteplatten 142 aufgenommen. Die Haltestreben 140, 140' sind übereinander mit unterschiedlichen Abständen zur Stirnseite 136 der Förder-Maschine an den Halteplatte 142 aufgenommen. Das Kopplungsmittel 132 weist eine Steckaufnahme 142 mit mehreren Steckverbindern 144, 144' für eine strom- und/oder fluidleitende Verbindung mit den an der Förder-Maschine 114 koppelbaren Form-Modulen auf. Gleiche Bauteile sind mit denselben Bezugszahlen bezeichnet.

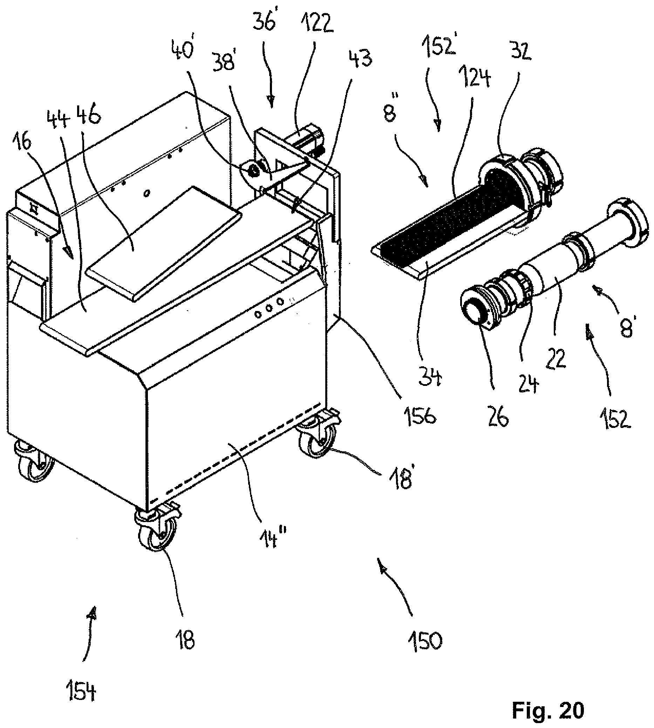

Figur 20 zeigt eine weitere Ausführungsform eines erfindungsgemäßen modularen Systems 150 zum Formen und Fördern von Lebensmittelprodukten aus pastösen Massen. Das System 150 weist Form-Module 152, 152' und eine Förder-Maschine 154 als Basismodul für die damit koppelbaren Form-Module 152, 152' auf. Die Förder-Maschine 154 und die Form-Module 152, 152' weisen nicht näher dargestellte Kopplungsmittel zum Herstellen einer lösbaren Verbindung auf. Mit Hilfe der Kopplungsmittel erfolgt sowohl eine mechanische als auch eine elektrische oder fluidleitende Verbindung zwischen der Förder-Maschine 154 und jeweils einem der Form-Module 152, 152'. Die Förder-Maschine 154 weist ein Maschinen-Gestell 14" und daran angeordnete Rollen bzw. Rollelemente 18, 18' auf. Wie auch zu den vorherigen erfindungsgemäßen Systemen 1, 110 beschrieben, umfasst die Förder-Maschine 154 ebenfalls eine Fördereinrichtung 16 mit in der Höhe zum Maschinen-Gestell 14" und im Abstand relativ zueinander verstellbar angeordneten Förderelementen 44, 46. Mit dem Maschinen-Gestell 14" ist des Weiteren eine Portioniereinheit 36' mit einem Portioniermesser 38' fest verbunden, die dem Aufnahmebereich 43 des als Abtransportband ausgebildeten Förderelements 44 zugeordnet ist. Die Portioniereinheit 36' ist somit, bezogen auf die Förderrichtung der Fördereinrichtung 16 am vorderen Ende des Förderelements 44 angeordnet. Die Portioniereinheit 36' ist über die gezeigte Stützstruktur 156 am Maschinen-Gestell 14" angeordnet. Gemäß einer Ausgestaltung kann die Portioniereinheit 36' aus ihrer in Figur 20 gezeigten Arbeitsstellung in eine Parkstellung bewegt, insbesondere verschwenkt oder verschoben werden. Das Überführen in die Parkstellung erfolgt, wenn die Förder-Maschine 154 mit dem in Figur 15 gezeigten Form-Modul 112 mit einer Formeinrichtung 8 zum Formen kugelförmig geformter Produkte, auch bezeichnet als Bällchen-Former, gekoppelt wird. In der vorliegend in Figur 20 gezeigten Arbeitsstellung passiert das Fördermesser 38' den Förderweg des Endlos-Stranges 124 in vorbestimmten Zeitabschnitten. Der Endlosstrang 124 wird von den mit der Förder-Maschine 154 koppelbaren Form-Modulen 152, 152' in Richtung der Portioniereinheit 36' der Förder-Maschine 154 kontinuierlich über die Fördereinheit 34 abgeführt bzw. am Auslass 26 des Förderkanals 22 ausgegeben. Das Portioniermesser 38' ist über ein Drehlager 40' mit einer parallel zur Förderrichtung des Endlos-Stranges 124 ausgerichteten Rotationsachse gehalten und wird vom Motor 122 mit bevorzugt einer kontinuierlichen Drehzahl angetrieben. Das Portioniermesser weist in der vorliegenden Ausführungsform eine Messerklinge auf und wird über eine nicht näher dargestellte Messerführung bevorzugt senkrecht zur Förderrichtung des Förderstranges 124 am freien Ende geführt. Alternativ weist das Portioniermesser 38' zwei sich zu beiden Seiten des Drehlagers 40 erstreckende Messerklingen auf, welche 180° versetzt zueinander angeordnet sind. Die Formeinrichtungen 8', 8" der From-Module 152, 152' sind jeweils mit der in Figur 5 gezeigten Füllmaschine 50 fluidleitend koppelbar.

**Bezugszeichenliste**

| | | | |
|---|---|---|---|
| 1, 1', 1" | System | 72, 72', 72" | Arretiereinrichtung |
| 2, 2', 2" | Form-Modul | 74, 74', 74" | Arretiereinrichtung |
| 4, 114 | Förder-Maschine | 76, 76', 76" | Arretierelement |
| 6, 6', 6" | Maschinen-Gestell | 78, 78' | Stellantrieb |
| 8, 8', 8" | Formeinrichtung | 80 | Ausnehmung |
| 10 | Portioniereinheit | 82 | Kolben |
| 12 | Füllstromteiler | 84, 84' | Arretierelement |
| 14, 14', 14" | Maschinen-Gestell | 86, 86', 86" | Stellantrieb |
| 16 | Fördereinrichtung | 88, 90 | Kopplungsmittel |
| 18, 18' | Rollen | 92, 92' | Kontaktseite |
| 20 | Förderleitung | 94, 94' | Elektro-Steckverbinder |
| 22 | Förderkanal | 96, 96' | Steckverbinder |
| 24 | Düse | 98 | Steckpins |
| 26 | Auslass | 100 | Steckaufnahme |
| 28 | Portioniereinheit | 102, 102' | Steckverbinder |
| 30 | Portioniermesser | 104, 104' | Rückseite |
| 32 | Formteil | 106, 108 | Anschlüsse |
| 34 | Fördereinheit | 110, 110', 110" | System |
| 36 | Portioniereinheit | 112, 112', 112" | Form-Modul |
| 38 | Portioniermesser | 116 | Stützstruktur |
| 40 | Drehlager | 118 | Halteteil |
| 42 | Messerführung | 120, 120' | Produkt |
| 43 | Aufnahmebereich | 122 | Motor |
| 44,46 | Förderelemente | 124 | Endlos-Strang |
| 48, 48' | Verstellmittel | 126, 126' | Strangabschnitte |
| 50 | Füllmaschine | 128 | Feststellbremse |
| 52 | Fülltrichter | 130, 132 | Kopplungsmittel |
| 54 | Gehäuse | 130', 132' | Kopplungsmittel |
| 56 | Rohrleitung | 134 | Aufnahmeschlitz |
| 58 | Durchtrittsöffnung | 136 | Stirnseite |
| 60 | Fleischbrätwagen | 138 | Aufnahmeeinrichtung |
| 62 | Aufnahmebehälter | 0, 140' | Haltestreben |
| 64,66 | Kopplungsmittel | 142 | Steckaufnahme |
| 68 | Hülsenkörper | 144, 144' | Steckverbinder |
| 70 | Dorn | 150 | System |
| 152 | Form-Modul | 156 | Sützstruktur |
| 154 | Förder-Maschine | | |

## Patentansprüche

1. Modulares System (150) zum Formen und Fördern von Lebensmittel-Produkten aus pastöser Masse, mit
einer Förder-Maschine (154) zum Fördern der Lebensmittel-Produkte, mit
einem Maschinen-Gestell (14"), und
einer an dem Maschinen-Gestell (14") angeordneten Fördereinrichtung (16) zum Fördern der Lebensmittel-Produkte,
wobei eine am Maschinen-Gestell (14") angeordnete Portioniereinheit (36') zum Unterteilen eines durch ein Form-Modul (152, 152') geformten Endlos-Stranges (124) in Strangabschnitte vorgesehen ist, wobei die Portioniereinheit (36') ein Portioniermesser (38') aufweist, welches in der Arbeitstellung der Portioniereinheit (36') den Förderweg des Endlos-Stranges (124) in vorbestimmten Zeitabständen passiert, wobei das Portioniermesser (38') mittels eines Drehlagers (40') rotatorisch aufgenommen und von einem Motor (122) angetrieben wird, wobei das Portioniermesser (38') ein Einzelklingen- oder Mehrklingenmesser sein kann,
**gekennzeichnet durch** mehrere verschiedene Form-Modulen (152, 152') zur Herstellung unterschiedlich geformter Lebensmittel-Produkte,
wobei an der Förder-Maschine (154) und den Form-Modulen (2152, 152') miteinander korrespondierende Kopplungsmittel (64, 66, 88, 90, 130, 130', 132, 132') zum reversiblen Koppeln und Entkoppeln der Form-Module (2, 2', 2", 112, 112', 112", 152, 152') mit der Förder-Maschine (4, 114, 154) zum Austausch der Form-Module an der Förder-Maschine ausgebildet sind, und
die Förder-Maschine (154) dem jeweils damit gekoppelten Form-Modul (152, 152') in Förderrichtung der pastösen Lebensmittel-Masse nachgeschaltet ist.

2. Modulares System nach Anspruch 1,
**gekennzeichnet durch** ein oder mehrere Kopplungsmittel (64, 130) zum mechanischen Verbinden mit einem oder mehreren Kopplungsmitteln (66, 130') des vorzugsweise vorgeschalteten Form-Moduls (152, 152'),
und durch ein oder mehrere Kopplungsmittel (88, 132) zum Herstellen einer elektrischen und/oder fluidleitenden Verbindung mit dem Form-Modul (152, 152').

3. Modulares System nach einem der Ansprüche 1 oder 2,
**dadurch gekennzeichnet, dass** das Kopplungsmittel (64, 88, 130, 132) ein Aufnahmeteil aufweist, welches korrespondierend zu einem in dem oder an dem Aufnahmeteil aufnehmbaren Gegenstück eines Kopplungsmittels (66, 90, 130', 132') des Form-Modules (152, 152') ausgebildet ist, wobei das Aufnahmeteil als Hülsenkörper (68) oder als Halteteil (118) mit mehreren, vorzugsweise horizontal verlaufenden Haltestreben (140, 140') ausgebildet ist.

4. Modulares System nach einem der Ansprüche 1 bis 3,
**dadurch gekennzeichnet, dass** dem Kopplungsmittel (64, 66) eine Arretiereinrichtung (74, 74', 74") zugeordnet ist, welche eingerichtet ist, ein Kopplungsmittel (66) des Form-Moduls (2, 2', 2") relativ zu dem Kopplungsmittel (64) der Förder-Maschine (4) zu arretieren.

5. Modulares System nach Anspruch 4,
**dadurch gekennzeichnet, dass** die Arretiereinrichtung (74, 74', 74") mindestens ein beweglich gehaltenes Arretierelement (76, 76', 76", 84, 84') aufweist, das in eine Arretierposition, in der die Kopplungsmittel (64, 66) zueinander arretiert sind, und eine Freigabeposition für die Kopplungsmittel bringbar ist.

6. Modulares System nach Anspruch 5,
**dadurch gekennzeichnet, dass** das Arretierelement (76, 76', 76", 84, 84') als ein in der Arretierposition mit einer Ausnehmung (80) am Kopplungsmittel (66) des Form-Moduls (2, 2', 2") in eine Formschlußverbindung bringbarer Verriegelungszapfen oder als ein oder mehrere mit dem Kopplungsmittel (66) des Form-Moduls (2, 2', 2") in haltende Wirkverbindung bringbare Klemmteile ausgebildet ist.

7. Modulares System nach einem der Ansprüche 5 oder 6,
**dadurch gekennzeichnet, dass** das Arretierelement (76, 76', 76", 84, 84') an einem manuell betätigbaren, einem elektrischen oder einem mittels eines Fluids gesteuerten Stellantrieb (78, 78' 86, 86', 86") angeordnet ist.

8. Modulares System nach einem der Ansprüche 1 bis 7,
**dadurch gekennzeichnet, dass** die Fördereinrichtung (16) zwei übereinander angeordnete, gegenläufig angetriebene Förderelemente (44, 46) aufweist, wobei die Förderelemente (44, 46) im Abstand relativ zueinander veränderbar sind.

9. Modulares System nach einem der Ansprüche 1 bis 8,
**gekennzeichnet durch**
eine Füll-Maschine (50), welche im Förderweg der pastösen Lebensmittel-Masse stromaufwärts des Form-Moduls (152, 152') anordbar ist.

10. Modulares System nach Anspruch 1 bis 9,
**dadurch gekennzeichnet, dass** jedes der Form-Module (152, 152') zumindest eine Formeinrichtung (8, 8', 8') zum Formen dreidimensionaler Produkte aus der Lebensmittel-Masse aufweist.

11. Modulares System nach einem der vorstehenden Ansprüche,
**dadurch gekennzeichnet, dass** jedes der Form-Module (2, 2', 2") ein Maschinen-Gestell (6, 6', 6") aufweist, an dem die Formeinrichtung (8, 8', 8") zum Formen dreidimensionaler Produkte angeordnet ist, und vorzugsweise ein oder mehrere am Maschinen-Gestell (6, 6', 6") angeordnete Rollen (18, 18') zum Verfahren des Form-Modules (2, 2', 2") aufweist.

12. Modulares System nach einem der Ansprüche 10 und 11,
**dadurch gekennzeichnet, dass** die Formeinrichtung (8) einen Füllstromteiler (12) aufweist, welcher der Portioniereinheit (10) im Förderweg für die pastöse Masse vorgeschaltet ist.

## Claims

1. A modular system (150) for shaping and conveying foodstuff products of pasty material, comprising
a conveyor machine (154) for conveying the foodstuff products, comprising
a machine frame (14"), and
a conveyor device (16) arranged at the machine frame (14") for conveying the foodstuff products,
wherein a portioning unit (36') arranged on the machine frame (14") for subdividing an endless string (124) shaped by a shaping module (152, 152') into string portions is provided, said portioning unit (36') having a portioning knife (38') which in the working position of the portioning unit (36') passes the conveyor path of the endless string (124) at predetermined time intervals,
wherein the portioning knife (38') is rotatably carried by way of a rotary bearing (40') and is driven by a motor (122), wherein the portioning knife (38') can be a single-blade or a multi-blade knife,
**characterized by** a plurality of different shaping modules for the production of different shaped foodstuff products,
wherein provided on the conveyor machine (154) and the shaping modules (152, 152') are mutually corresponding coupling means (64, 66, 88, 90, 130, 130', 132, 132') for reversibly coupling and decoupling the shaping modules (2, 2', 2", 112, 112', 112", 152, 152', 152") to the conveyor machine (4, 114, 154) for changing the shaping modules on the conveyor machine, and
wherein the conveyor machine (154) is disposed downstream of the respective shaping module (152, 152') coupled thereto in the conveyor direction of the pasty foodstuff material.

2. A modular system according to claim 1 one or more coupling means (64, 130) for mechanical coupling to one or more coupling means (66, 130') of the preferably upstream-disposed shaping module (152, 152') and by one or more coupling means (88, 132) for making an electrical and/or fluid-conducting connection to the shaping module (152, 152').

3. A modular system according to one of claims 1 to 2 **characterised in that** the coupling means (64, 88, 130, 132) has a receiving portion which is of a design configuration corresponding to a counterpart portion of a coupling means (66, 90, 130', 132') of the shaping module (152, 152'), which counterpart portion can be received in or at the receiving portion, the receiving portion being in the form of a sleeve body (68) or a holding portion (118) having a plurality of preferably horizontally extending holding struts (140, 140').

4. A modular system according to one of claims 1 to 3 **characterised in that** associated with the coupling means (64, 66) is an arresting device (74, 74', 74") which is adapted to arrest a coupling means (66) of the shaping module (2, 2', 2") relative to the coupling means (64) of the conveyor machine (4).

5. A modular system according to claim 4 **characterised in that** the arresting device (74, 74', 74") has at least one moveably mounted arresting element (76, 76', 76", 84, 84') which can be moved into an arresting position in which the coupling means (64, 66) are arrested relative to each other and a release position for the coupling means.

6. A modular system according to claim 5 **characterised in that** the arresting element (76, 76', 76", 84, 84') is in the form of a locking pin which in the arresting position can be brought into a positively locking connecting relationship with an opening (80) on the coupling means (66) of the shaping module (2, 2', 2") or is in the form of one or more clamping portions which can be brought into holding operative connecting relationship with the coupling means (66) of the shaping module (2, 2', 2").

7. A modular system according to one of claims 5 and 6 **characterised in that** the arresting element (76, 76', 76", 84, 84') is arranged on an adjusting drive (78, 78', 86, 86', 86") which is manually actuable or which is electrical or which is controlled by means of a fluid.

8. A modular system according to one of claims 1 to 7 **characterised in that** the conveyor device (16) has two mutually superposed conveyor elements (44, 46) driven in opposite relationship, wherein the conveyor elements (44, 46) are variable in their spacing relative to each other.

9. A modular system according to one of claims 1 to 8 **characterized by** a filling machine (50) which can be arranged upstream of the shaping module (152, 152') in the conveyor path of the pasty foodstuff material.

10. A modular system according to one of claims 1 to 9 **characterised in that** each of the shaping modules (152, 152') has at least one shaping device (8, 8', 8") for shaping three-dimensional products from the foodstuff material.

11. A modular system according to one of claims 1 to 10 **characterised in that** each of the shaping modules (2, 2', 2") has a machine frame (6, 6', 6") on which the shaping device (8, 8', 8") for shaping three-dimensional products is arranged, and preferably one or more rollers (18, 18') arranged on the machine frame (6, 6', 6") for displacement of the shaping module (2, 2', 2").

12. A system according to one of claims 10 and 11**characterised in that** the shaping device (8) has a filling flow divider (12) which is disposed upstream of the portioning unit (10) in the conveyor path for the pasty material.

## Revendications

1. Système modulaire (150) pour la formation et le transport de produits alimentaires de masse pâteuse, avec
une machine de transport (154) pour le transport des produits alimentaires, avec
un bâti de machine (14"), et
un dispositif de transport (16) agencé au niveau du bâti de machine (14") pour le transport des produits alimentaires,
dans lequel une unité de portionnage (36') agencée au niveau du bâti de machine (14") est prévue pour la division d'un brin sans fin (124) formé par un module de forme (152, 152') en sections de brin, dans lequel l'unité de portionnage (36') présente un couteau de portionnage (38') qui passe dans la position de travail de l'unité de portionnage (36') la voie de transport du brin sans fin (124) à des intervalles de temps prédéterminés,
dans lequel le couteau de portionnage (38') est reçu au moyen d'un palier rotatif (40') de manière rotative et est entraîné par un moteur (122), dans lequel le couteau de portionnage (38') peut être un couteau à une lame ou à plusieurs lames,
**caractérisé par** plusieurs modules de forme (152, 152') différents pour la fabrication de produits alimentaires formés différemment,
dans lequel des moyens de couplage (64, 66, 88, 90, 130, 130', 132, 132') correspondant entre eux sont réalisés au niveau de la machine de transport (154) et des modules de forme (2152, 152') pour le couplage et le découplage réversible des modules de forme (2, 2', 2", 112, 112', 112", 152, 152') avec la machine de transport (4, 114, 154) pour l'échange des modules de forme au niveau de la machine de transport, et
la machine de transport (154) est montée en aval du module de forme (152, 152') couplé respectivement à celle-ci dans le sens de transport de la masse alimentaire pâteuse.

2. Système modulaire selon la revendication 1,
**caractérisé par** un ou plusieurs moyens de couplage (64, 130) pour la liaison mécanique avec un ou plusieurs moyens de couplage (66, 130') du module de forme (152, 152') monté en amont de préférence,
et par un ou plusieurs moyens de couplage (88, 132) pour l'établissement d'une liaison électrique et/ou acheminant du fluide avec le module de forme (152, 152').

3. Système modulaire selon l'une des revendications 1 ou 2,
**caractérisé en ce que** le moyen de couplage (64, 88, 130, 132) présente une partie de réception qui est réalisée de manière correspondante à une pièce antagoniste pouvant être reçue dans la ou au niveau de la partie de réception d'un moyen de couplage (66, 90, 130', 132') du module de forme (152, 152'), dans lequel la partie de réception est réalisée comme corps de douille (68) ou comme partie de retenue (118) avec plusieurs entretoises de retenue (140, 140') s'étendant de préférence horizontalement.

4. Système modulaire selon l'une des revendications 1 à 3,
**caractérisé en ce qu'**un dispositif d'arrêt (74, 74', 74") est associé au moyen de couplage (64, 66), lequel est aménagé afin d'arrêter un moyen de couplage (66) du module de forme (2, 2', 2") par rapport au moyen de couplage (64) de la machine de transport (4).

5. Système modulaire selon la revendication 4,
**caractérisé en ce que** le dispositif d'arrêt (74, 74', 74") présente au moins un élément d'arrêt (76, 76', 76", 84, 84') maintenu de manière mobile qui peut être amené dans une position d'arrêt dans laquelle les moyens de couplage (64, 66) sont arrêtés l'un par rapport à l'autre, et une position de libération pour les moyens de couplage.

6. Système modulaire selon la revendication 5,
**caractérisé en ce que** l'élément d'arrêt (76, 76', 76", 84, 84') est réalisé comme un tenon de verrouillage pouvant être amené dans la position d'arrêt avec un évidement (80) au niveau du moyen de couplage (66) du module de forme (2, 2', 2") dans une liaison à complémentarité de formes ou comme une ou plusieurs parties de serrage pouvant être amenées avec le moyen de couplage (66) du module de forme (2, 2', 2") en liaison active de retenue.

7. Système modulaire selon l'une des revendications 5 ou 6,
**caractérisé en ce que** l'élément d'arrêt (76, 76', 76", 84, 84') est agencé au niveau d'un entraînement de réglage (78, 78', 86, 86', 86") actionnable manuellement, électrique ou commandé au moyen d'un fluide.

8. Système modulaire selon l'une des revendications 1 à 7,
**caractérisé en ce que** le dispositif de transport (16) présente deux éléments de transport (44, 46) entraînés en sens inverse, agencés l'un au-dessus de l'autre, dans lequel les éléments de transport (44, 46) sont modifiables à distance l'un de l'autre.

9. Système modulaire selon l'une des revendications 1 à 8,
**caractérisé par** une machine de remplissage (50) qui peut être agencée dans la voie de transport de la masse alimentaire pâteuse en amont du module de forme (152, 152').

10. Système modulaire selon la revendication 1 à 9,
**caractérisé en ce que** chacun des modules de forme (152, 152') présente au moins un dispositif de formation (8, 8', 8") pour la formation de produits tridimensionnels en masse alimentaire.

11. Système modulaire selon l'une des revendications précédentes,
**caractérisé en ce que** chacun des modules de forme (2, 2', 2") présente un bâti de machine (6, 6', 6") au niveau duquel le dispositif de formation (8, 8', 8") est agencé pour la formation de produits tridimensionnels, et de préférence présente un ou plusieurs rouleaux (18, 18') agencés au niveau du bâti de machine (6, 6', 6") pour le déplacement du module de forme (2, 2', 2").

12. Système modulaire selon l'une des revendications 10 et 11,
**caractérisé en ce que** le dispositif de formation (8) présente un diviseur de courant de remplissage (12) qui est monté en amont de l'unité de portionnage (10) dans la voie de transport pour la masse pâteuse.
